# EUROPEAN PATENT APPLICATION

(11) **EP 4 803 926 A1**
(43) Date of publication of application: **09.09.2026**
(21) Application number: 26159198.6
(22) Date of filing: 18.02.2026
(51) Int. Cl.: G01S 7/481, G01S 17/04, G01S 17/42

(54) **SCANNER**

(30) Priority: 05.03.2025 JP 2025034380; 26.01.2026 JP 2026010230
(71) Applicant: Keyence Corporation, Osaka-shi, Osaka 533-8555 (JP)
(72) Inventor: KOJIMA, Kenji, Osaka-shi, Osaka 533-8555 (JP)
(74) Representative: Hoffmann Eitle

(57) **Abstract**

The scanner includes a light projecting unit, a scanning unit, a light receiving unit, a calculation unit, a storage unit, and a determination output unit. The scanning unit scans detection light from the light projecting unit in a circumferential direction. The light receiving unit receives reflected light of the detection light reflected by an object in a detection area. The calculation unit calculates a distance measurement value to the object. The storage unit stores information on a set monitoring area. The determination output unit determines entry of an object into a monitoring area. The light projecting unit includes a first light projecting unit and a second light projecting unit. The first light projecting unit and the second light projecting unit are arranged at spatially separated positions, and the first and second detection lights are spatially separated.

## Description

### BACKGROUND OF THE INVENTION

### 1. TECHNICAL FIELD

The present invention relates to a scanner capable of detecting and determining an object.

### 2. DESCRIPTION OF THE RELATED ART

The scanner is a device capable of detecting and determining an object. As an example of a scanner, the laser scanner (area monitoring sensor) described in JP 2016-105048A projects detection light (specifically, laser light) from a light projecting unit thereof and receives reflected light obtained by the detection light reflected by an object, thereby measuring a distance to the object on the basis of a time difference, a phase difference, or the like from the projection to the reception. The laser scanner described in JP 2016-105048A compares the measured distance with a threshold value of the distance corresponding to the outer edge of the monitoring area to determine whether the object has entered the monitoring area.

The monitoring area is set in advance by the user using the setting data creation device and stored in the setting storage unit (setting data storage unit) of the laser scanner.

Since scanners including laser scanners have very high detection sensitivity, even minute objects (for example, dust or dirt, insects, or the like) that are not objects to be determined may be erroneously determined as objects unintentionally.

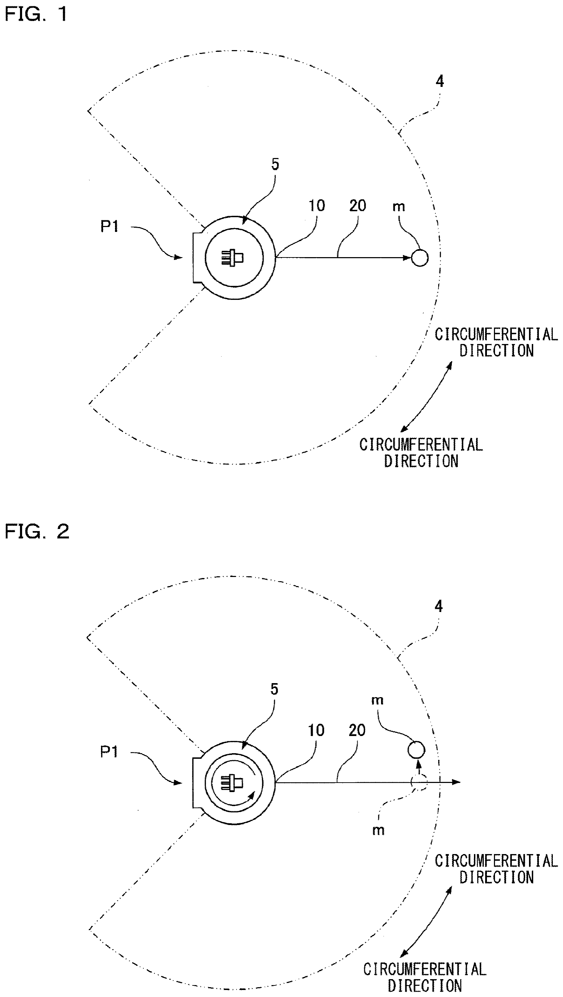

In order not to erroneously determine a minute object as an object that is an object to be detected, scanners P1, P2, and P3 illustrated in FIGS. 1 to 6 are conceivable.

As illustrated in FIGS. 1 and 2, a scanner P1 causes a scanning unit 5 to scan a detection light 20 in a circumferential direction while causing a light projecting unit 10 to intermittently project the detection light 20. The detection light 20 whose scanning angle is every 360° (every time the light projecting unit 10 makes one rotation in the circumferential direction) is projected in the same direction.

In the case of a light object such as the minute object m, the object usually does not stay at the same place and immediately moves by wind or the like. Therefore, as illustrated in FIG. 1, even if the detection light 20 hits the minute object m, the detection light does not hit the minute object m as the minute object m immediately moves as illustrated in FIG. 2. Therefore, if the object is determined for the first time in a case where the detection light 20 in the same direction continues to hit the object in a predetermined time (also referred to as a response time) or more, the minute object m is not erroneously determined. However, in a case where the minute object m remains at the same place for the response time or more, the minute object m is erroneously determined as the object.

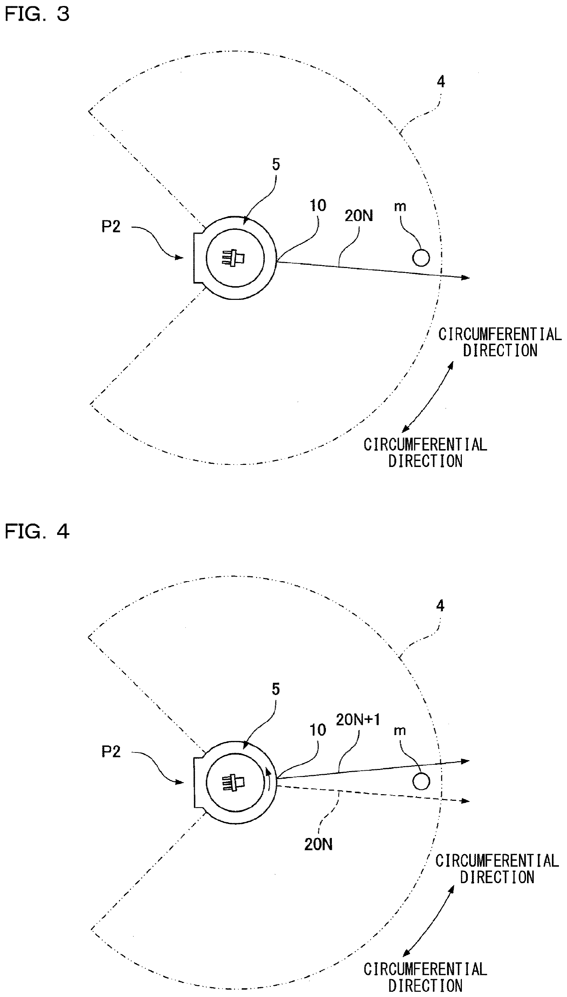

As a countermeasure, as illustrated in FIGS. 3 and 4, the scanner P2 uses both detection light 20N at an arbitrary light projection timing and detection light 20N+1 at a next light projection timing for determination of the object. This is because, as illustrated in FIG. 4, it is considered that a small object such as the minite object m does not hit both of the detection lights 20N and 20N+1.

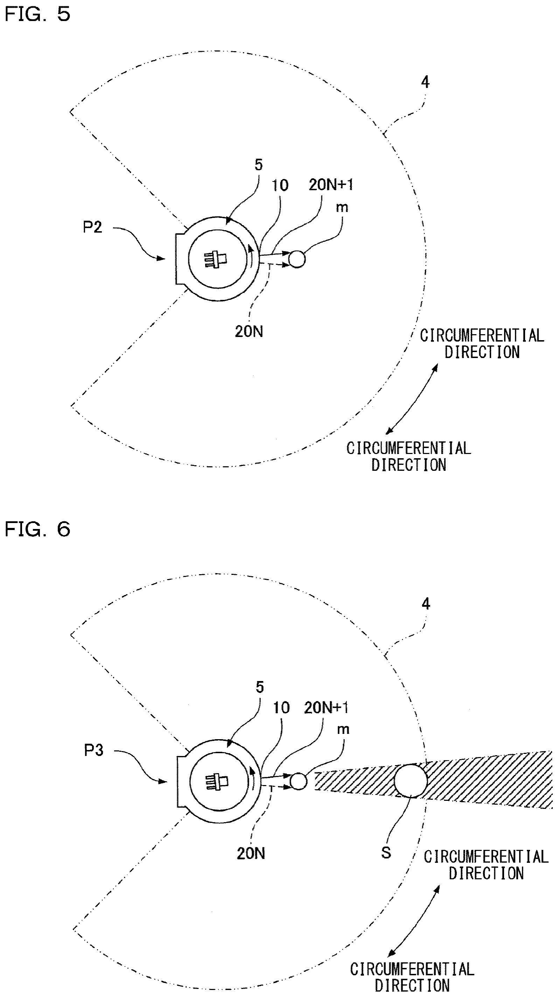

However, since the detection light 20N at an arbitrary light projection timing and the detection light 20N+1 at the next light projection timing spread radially, as illustrated in FIG. 5, in a case where the minute object m exists near the light projecting unit 10, the minute object m hits both of the detection lights 20N and 20N+1. That is, in a case where the minute object m exists near the light projecting unit 10, the minute object m is erroneously determined as the object.

As a countermeasure against this, as illustrated in FIG. 6, it is conceivable that even if the minute object m hits both the detection lights 20N and 20N+1, the scanner P3 performs processing with software or the like determining that the minute object m does not hit both the detection lights 20N and 20N+1. However, if such processing is performed, the object S on the extension of the detection lights 20N and 20N+1 is not determined, that is, the object S that is an object to be detected is not appropriately determined.

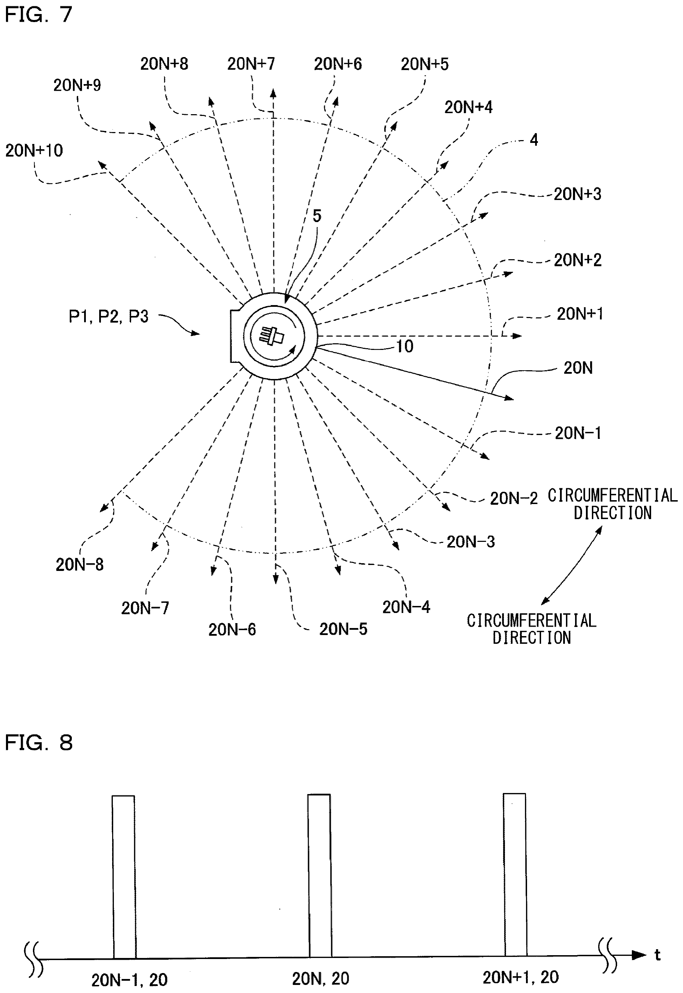

Meanwhile, as illustrated in FIG. 7, the light projecting unit 10 of each of the scanners P1, P2, and P3 not only projects light at an arbitrary light projection timing (detection light 20N) and a next light projection timing (detection light 20N+1), but also intermittently projects light at a predetermined light projection timing. Hereinafter, those projected at each projection timing after the detection light 20N+1 are sequentially referred to as detection light 20N+2, detection light 20N+3, detection light 20N+4, • • •. Similarly, the light projected at each light projection timing before the detection light 20N is sequentially referred to as detection light 20N-1, detection light 20N-2, detection light 20N-3, • • •.

As illustrated in FIG. 8, the detection light 20N-1, the detection light 20N, and the detection light 20N+1, which are examples of the detection light 20, are intermittently projected at a predetermined light projection timing. Of course, although not illustrated except for the detection lights 20N-1 to 20N+1, the detection light 20 is intermittently projected at a predetermined light projection timing.

As described above, in the case of the scanners P1, P2, and P3 described above, it is difficult not to erroneously determine the minute object m that is not the object to be detected while appropriately determining the object S that is the object to be detected.

### SUMMARY OF THE INVENTION

The present invention has been made in view of the above-described problems, and an object of the present invention is to provide a scanner that can reduce the possibility of erroneously determining a minute object that is not an object to be detected while appropriately determining an object that is an object to be detected.

According to one aspect of the present invention, a scanner includes a light projecting unit, a scanning unit, a light receiving unit, a calculation unit, a storage unit, and a determination output unit. The light projecting unit projects detection light. The scanning unit scans the detection light projected from the light projecting unit in a circumferential direction around a rotation axis. The light receiving unit receives reflected light obtained by the detection light scanned by the scanning unit and reflected by an object in a detection area, and generates a light receiving signal. The calculation unit calculates a distance to the object based on the light receiving signal generated by the light receiving unit. The storage unit stores information of a monitoring area set in advance in the detection area. The determination output unit determines entry of the object into the monitoring area based on the distance calculated by the calculation unit and a scanning angle of the detection light scanned by the scanning unit, and outputs a control signal. The light projecting unit includes a first light projecting unit and a second light projecting unit. The first light projecting unit projects first detection light. The second light projecting unit is arranged at a position spatially separated from the first light projecting unit and projects second detection light from a position spatially separated from the first detection light.

According to the scanner of the present invention, it is possible to reduce the possibility of erroneously determining a minute object that is not an object to be detected while appropriately determining an object that is an object to be detected.

### BRIEF DESCRIPTION OF THE DRAWINGS

FIG. 1 is a schematic plan view of a scanner for preventing a minute object from being erroneously determined;
FIG. 2 is a schematic plan view of the scanner after detection light is scanned by one rotation in a circumferential direction from the state illustrated in FIG. 1;
FIG. 3 is a schematic plan view of another scanner for preventing a minute object from being erroneously determined;
FIG. 4 is a schematic plan view of the scanner in a state in which detection light is projected at a next light projection timing from the state illustrated in FIG. 3;
FIG. 5 is a schematic plan view of a state in which a minute object exists near a light projecting unit in the scanner illustrated in FIG. 4;
FIG. 6 is a schematic plan view of still another scanner for preventing a minute object from being erroneously determined;
FIG. 7 is a schematic plan view illustrating all detection light in a specific scan in the scanner of FIGS. 1 to 6;
FIG. 8 is a graph illustrating a light projection timing in a case where detection light is projected in the scanner of FIGS. 1 to 6;
FIG. 9 is a schematic plan view of a scanner for explaining the gist of the present invention, and illustrates a state in which an object is present in a monitoring area;
FIG. 10 is a schematic plan view of the scanner, and illustrates a state in which a minute object exists in a monitoring area;
FIG. 11 is a schematic plan view of the scanner in a state in which only first detection light is projected;
FIG. 12 is a schematic plan view of the scanner in a state in which only the second detection light is projected after a short time from FIG. 11;
FIG. 13 is a graph illustrating a light projection timing in a case where the first detection light and the second detection light are simultaneously projected;
FIG. 14 is a graph illustrating a light projection timing in a case where the first detection light is projected and the second detection light is projected after a short time;
FIG. 15 is a schematic perspective view illustrating a specific configuration of the scanner;
FIG. 16 is a schematic plan view of FIG. 15;
FIG. 17 is a schematic plan view of the scanner in a state in which only first detection light is projected;
FIG. 18 is a schematic plan view of the scanner in a state in which only the second detection light is projected after a short time from FIG. 17;
FIG. 19 is a schematic enlarged plan view of the scanner before and after the detection light is scanned by one rotation in the circumferential direction;
FIG. 20 is a schematic perspective view illustrating transverse shapes of the first detection light and the second detection light;
FIG. 21 is a transverse sectional view illustrating transverse shapes of the first detection light and the second detection light in a positional relationship different from that in FIG. 20;
FIG. 22 is a transverse sectional view illustrating transverse shapes of the first detection light and the second detection light in a positional relationship different from those in FIGS. 20 and 21;
FIG. 23 is a transverse sectional view illustrating transverse shapes of the first detection light and the second detection light in a positional relationship different from that in FIGS. 20 to 22;
FIG. 24 is a schematic enlarged plan view of a state in which the projection of the first detection light is stopped;
FIG. 25 is a schematic enlarged plan view of a state in which the projection of the second detection light is stopped;
FIG. 26 is an enlarged schematic plan view of the scanner in a state in which the first detection light and the second detection light are projected, the axes of the first detection light and the second detection light being narrowed as the distance from the light projecting unit increases;
FIG. 27 is a schematic enlarged plan view of the scanner in a state in which the first detection light and the second detection light are projected at the next light projection timing of FIG. 26;
FIG. 28 is a transverse sectional view illustrating a transverse shape in a state in which the first detection light and the second detection light are projected simultaneously;
FIG. 29 is a transverse sectional view illustrating a transverse shape in a state in which the first detection light is projected and the second detection light is projected after a short time;
FIG. 30 is a longitudinal sectional view of a scanner according to a first embodiment;
FIG. 31 is a block diagram of a scanner according to the first embodiment;
FIG. 32 is a longitudinal sectional view of a scanner according to a second embodiment;
FIG. 33 is a block diagram of the scanner according to the second embodiment; and
FIG. 34 is a flowchart illustrating an operation of the scanner according to the present invention.
FIG. 35 is a graph illustrating a light projection timing of a scanner according to a third embodiment.
FIG. 36 is a schematic plan view illustrating a state in which a scanning unit of a scanner according to a third embodiment scans detection light.

### DETAILED DESCRIPTION

Hereinafter, embodiments of the present invention will be described with reference to the drawings. Note that, in the drawings, the same or corresponding portions are denoted by the same reference numerals, and the description thereof will not be repeated.

In the following description, terms meaning a position or a direction such as "upper", "lower", and "horizontal" may be used. These terms are used for convenience to facilitate understanding of the embodiments, and are not related to the direction in which they are actually implemented unless otherwise expressly stated.

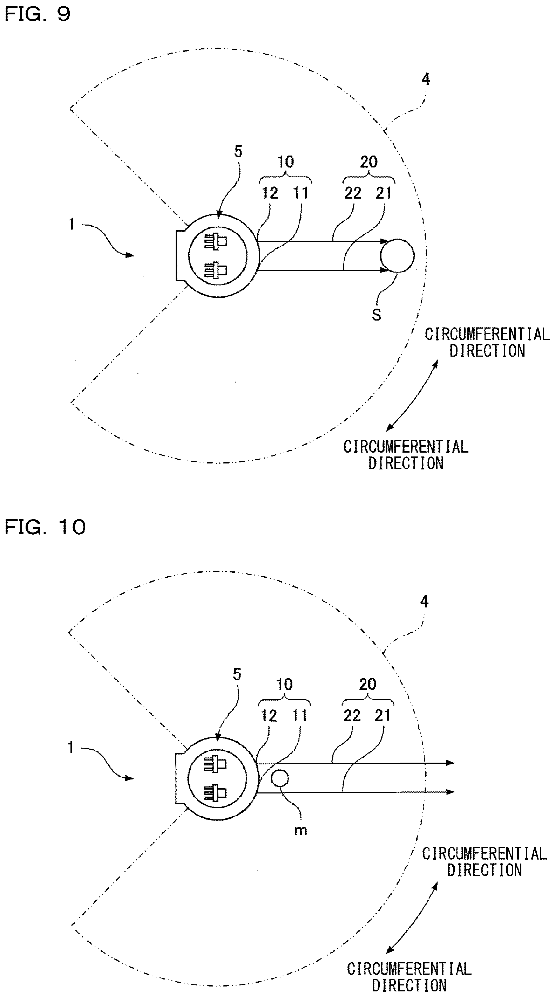

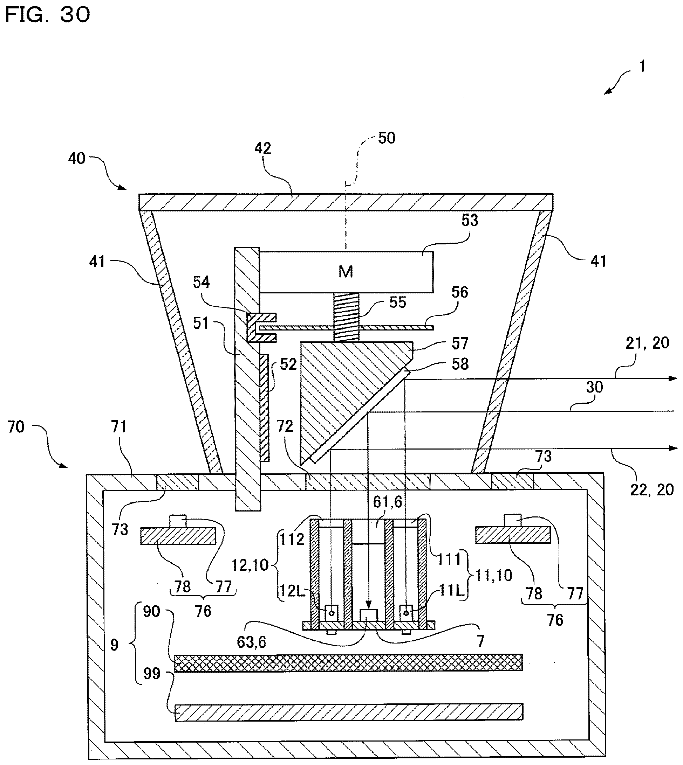

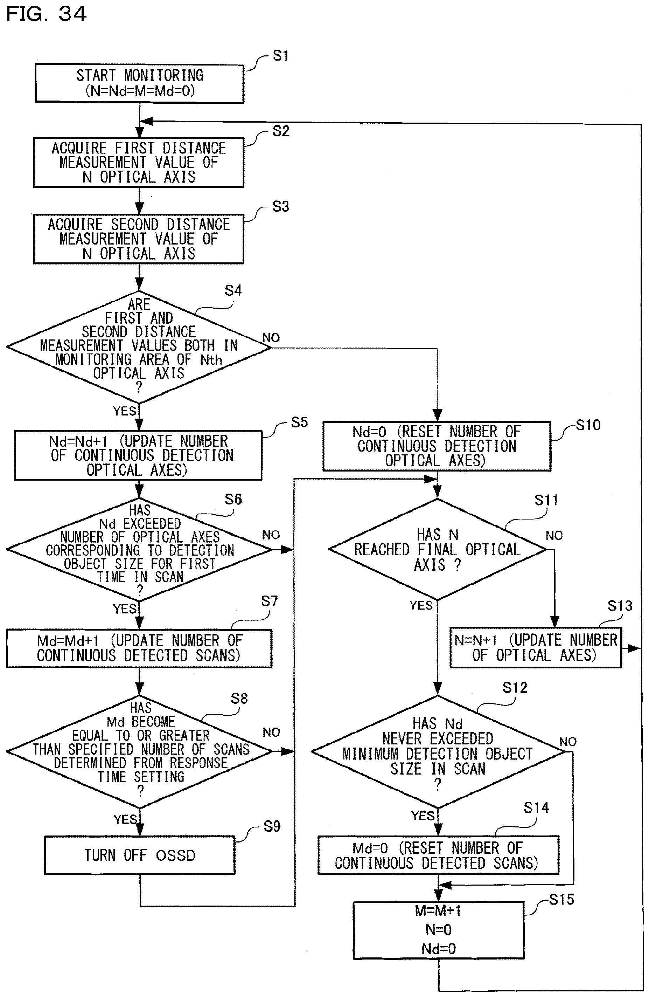

Hereinafter, the gist of the present invention will be described with reference to FIGS. 9 to 29. Thereafter, a scanner 1 according to each of the first and second embodiments of the present invention will be described with reference to FIGS. 30 to 33, and the operation of the scanner 1 according to the present invention will be described with reference to FIG. 34.

First, an outline of the scanner 1 for understanding the gist of the present invention will be described with reference to FIGS. 9 and 10. FIG. 9 is a schematic plan view of the scanner 1 for describing the gist of the present invention, and illustrates a state in which an object S exists in a monitoring area 4. FIG. 10 is a schematic plan view of the scanner 1, and illustrates a state in which a minute object m exists in the monitoring area 4.

As illustrated in FIG. 9, the scanner 1 includes a light projecting unit 10 that projects a detection light 20 and the scanning unit 5 that scans the detection light 20. Unlike the configuration illustrated in FIGS. 1 to 6, the light projecting unit 10 includes a first light projecting unit 11 and a second light projecting unit 12 different from the first light projecting unit 11. The first light projecting unit 11 projects first detection light 21, and the second light projecting unit 12 projects second detection light 22. The first light projecting unit 11 and the second light projecting unit 12 are arranged at spatially separated positions. The first detection light 21 and the second detection light 22 are spatially separated.

In the example illustrated in FIG. 9, only the object S that is the object to be detected is present in the monitoring area 4. The spatial separation between the first detection light 21 and the second detection light 22, that is, the interval between the first detection light 21 and the second detection light 22 is equal to or smaller than the size of the object S. Therefore, both the first detection light 21 and the second detection light 22 can be reflected by the object S. Therefore, the scanner 1 is set to determine the object S based on the characteristic that both the first detection light 21 and the second detection light 22 can be reflected by the object S.

On the other hand, in the example illustrated in FIG. 10, only the minute object m that is not an object to be detected exists in the monitoring area 4. The spatial separation between the first detection light 21 and the second detection light 22, that is, the interval between the first detection light 21 and the second detection light 22 exceeds the size of the minite object m. Therefore, both the first detection light 21 and the second detection light 22 are not reflected by the minite object m. Therefore, the scanner 1 is set so that the minute object m is not erroneously determined as the object S, that is, the minute object m is not erroneously determined based on the characteristic that both the first detection light 21 and the second detection light 22 are not reflected by the minute object m.

In a case where the first detection light 21 and the second detection light 22 are simultaneously projected, although not illustrated, the reflected light in which the first detection light 21 is reflected by the object S and the reflected light in which the second detection light 22 is reflected by the object S reach the scanner 1 almost simultaneously. For this reason, in a case where the first detection light 21 and the second detection light 22 are simultaneously projected, the scanner 1 cannot identify which one of the first detection light 21 and the second detection light 22 the received reflected light is from when there is only one light receiving unit that receives the reflected light. Therefore, in a case where the scanner 1 simultaneously projects the first detection light 21 and the second detection light 22, it is necessary to include at least a first light receiving unit that receives the reflected light by the first detection light 21 and a second light receiving unit that receives the reflected light by the second detection light 22.

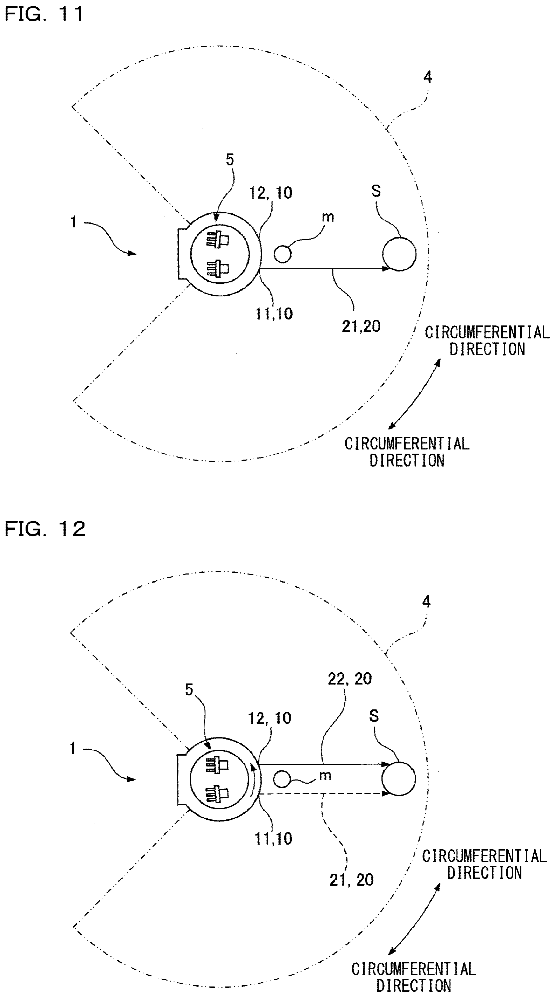

Next, an outline of the scanner 1 that does not simultaneously project the first detection light 21 and the second detection light 22 will be described with reference to FIGS. 11 and 12. FIG. 11 is a schematic plan view of the scanner 1 in a state where only the first detection light 21 is projected. FIG. 12 is a schematic plan view of the scanner 1 in a state where only the second detection light 22 is projected after a short time from FIG. 11.

As illustrated in FIG. 11, the scanner 1 causes the first light projecting unit 11 to project the first detection light 21 and does not cause the second light projecting unit 12 to project the second detection light 22. After a short time from the state illustrated in FIG. 11, as illustrated in FIG. 12, the scanner 1 causes the second light projecting unit 12 to project the second detection light 22 and does not cause the first light projecting unit 11 to project the first detection light 21.

When the first detection light 21 illustrated in FIG. 11 and the second detection light 22 illustrated in FIG. 12 are spatially separated from each other, even if the first detection light 21 and the second detection light 22 are not simultaneously projected, the scanner 1 has the functions and effects described with reference to FIGS. 9 and 10. That is, as illustrated in FIG. 12, in a case where the first detection light 21 is projected and the second detection light 22 is projected after a short time, the object S equal to or more than the interval between the first detection light 21 and the second detection light 22 is determined, and the minute object m less than the interval is not erroneously determined.

When the first detection light 21 is projected and the second detection light 22 is projected after a short time, although not illustrated, reflected light obtained by reflecting the first detection light 21 on the object S and reflected light obtained by reflecting the second detection light 22 on the object S reach the scanner 1 at different times. Therefore, when the first detection light 21 is projected and the second detection light 22 is projected after a short time, the scanner 1 can identify whether the received reflected light is from the first detection light 21 or the second detection light 22 on the basis of the time for receiving the reflected light. Therefore, in a case where the scanner 1 projects the first detection light 21 and projects the second detection light 22 after a short time, it is sufficient to have one light receiving unit.

In FIGS. 9 to 12, the detection light 20 projected at an arbitrary light projection timing (including a light projection timing after a short time) is illustrated, but the detection light 20 is intermittently projected at a predetermined light projection timing while scanning is performed. Hereinafter, the detection light 20 projected at an arbitrary light projection timing (including a light projection timing after a short time) is referred to as detection light of the N optical axis. The detection light projected at each projection timing after the arbitrary projection timing is sequentially referred to as detection light of the N+1 optical axis, detection light of the N+2 optical axis, • • •. Similarly, the detection light projected at each projection timing before the arbitrary projection timing is sequentially referred to as detection light of the N-1 optical axis, detection light of the N-2 optical axis, • • •. Further, the first detection light 21 of each of the N-1 optical axis, the N optical axis, and the N+1 optical axis is indicated by reference numeral 21N-1, reference numeral 21N, and reference numeral 21N+1. Similarly, the second detection light 22 of each of the N-1 optical axis, the N optical axis, and the N+1 optical axis is indicated by reference numeral 22N-1, reference numeral 22N, and reference numeral 22N+1.

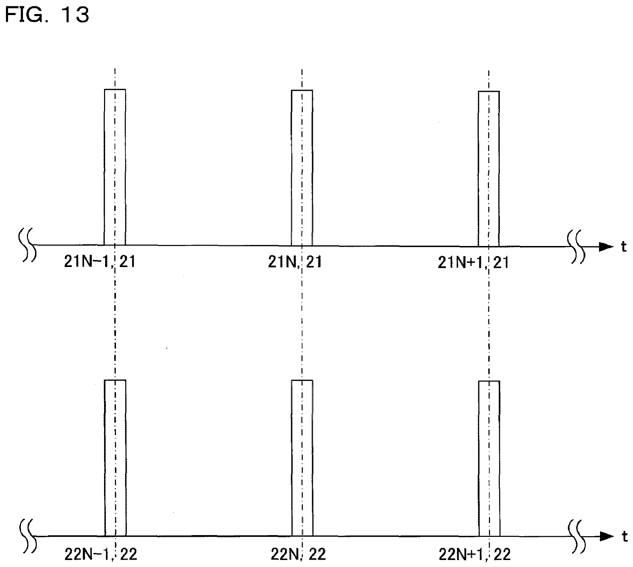

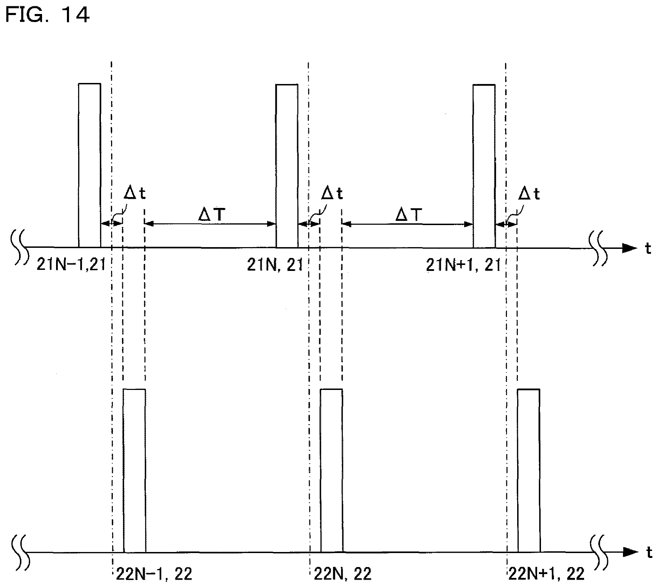

Next, the light projection timing of each of the first detection light 21 and the second detection light 22 will be described with reference to FIGS. 13 and 14. FIG. 13 is a graph illustrating a light projection timing in a case where the first detection light 21 and the second detection light 22 are simultaneously projected. FIG. 14 is a graph illustrating a light projection timing in a case where the first detection light 21 is projected and the second detection light 22 is projected after a short time.

In both FIGS. 13 and 14, the horizontal axis represents time, and the vertical axis represents the light projection amount. In addition, in both FIGS. 13 and 14, the upper part illustrates the projection of the first detection light 21 by the first light projecting unit 11, and the lower part illustrates the projection of the second detection light 22 by the second light projecting unit 12.

As illustrated in FIG. 13, in each of the N-1 optical axis, the N optical axis, and the N+1 optical axis, the light projection timing of the first detection light 21 from the first light projecting unit 11 and the light projection timing of the second detection light 22 from the second light projecting unit 12 are the same. The light projection timing illustrated in FIG. 13 corresponds to the light projection timing by the scanner 1 illustrated in FIGS. 9 and 10.

As illustrated in FIG. 14, in each of the N-1 optical axis, the N optical axis, and the N+1 optical axis, there is a light projection timing of the second detection light 22 from the second light projecting unit 12 after a short time from the light projection timing of the first detection light 21 from the first light projecting unit 11. That is, the light projection timing illustrated in FIG. 14 corresponds to the light projection timing by the scanner 1 illustrated in FIGS. 11 and 12. As illustrated in FIG. 14, a slight time interval Δt of the light projection timing of the first detection light 21 and the second detection light 22 on the same optical axis is much smaller than the time interval ΔT on the adjacent optical axes. However, the relative ratio of the time interval Δt to the time interval ΔT may be any degree, and for example, Δt may be about half of ΔT.

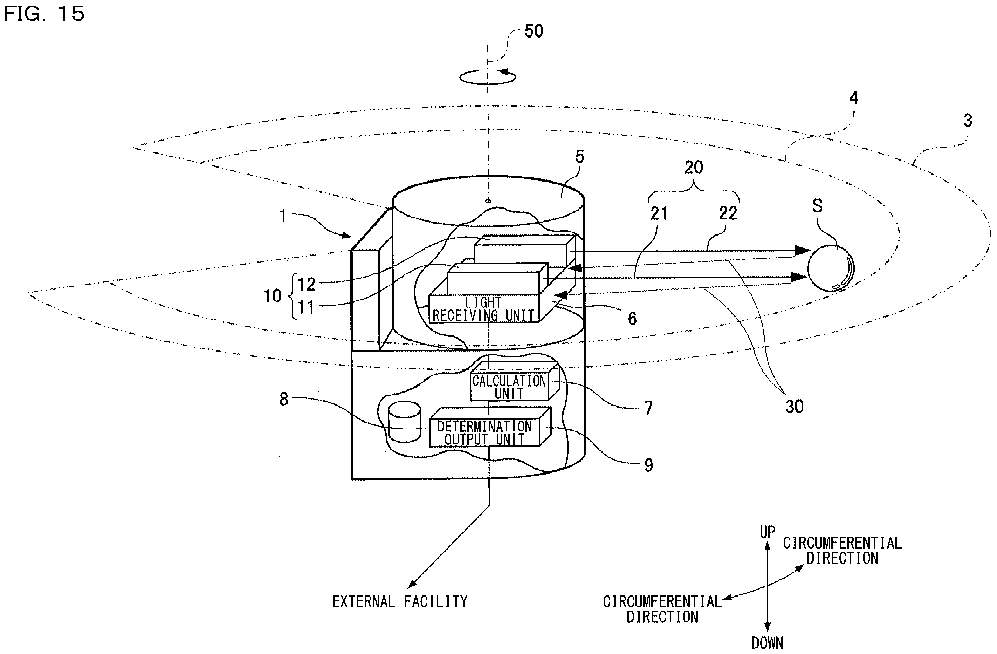

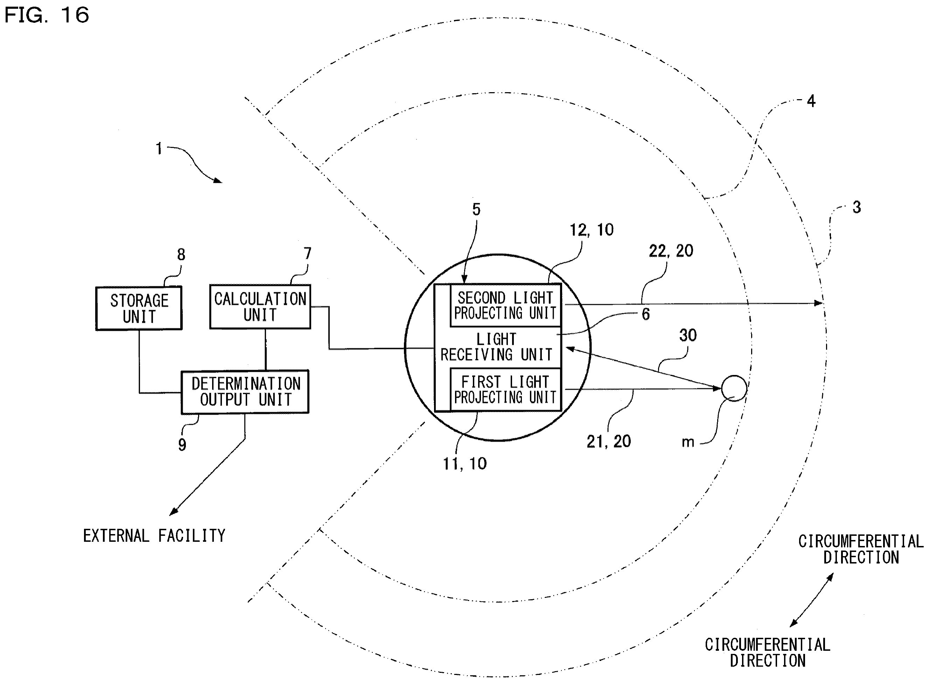

Hereinafter, a specific configuration of the scanner 1 described above will be described with reference to FIGS. 15 and 16 although there is a portion overlapping with the description described above. FIG. 15 is a schematic perspective view illustrating a specific configuration of the scanner 1. FIG. 16 is a schematic plan view of FIG. 15.

As illustrated in FIG. 15, around the scanner 1, there are a detection area 3 that is a range detectable by the detection light 20 and a monitoring area 4 that is an area where entry of the object S is determined. The monitoring area 4 is an area set in advance in the detection area 3 by the user. The monitoring area 4 can be set to any shape by the user in addition to the circular shape in the illustrated plan view.

The scanner 1 includes the light projecting unit 10, the scanning unit 5, a light receiving unit 6, a calculation unit 7, a storage unit 8, and a determination output unit 9. The light projecting unit 10 projects the detection light 20. The scanning unit 5 scans the detection light 20 projected from the light projecting unit 10 in the circumferential direction around the rotation axis 50. The light receiving unit 6 receives the reflected light 30 obtained by the detection light 20 scanned by the scanning unit 5 being reflected by the object S in the detection area 3, and generates a light receiving signal.

The calculation unit 7 calculates the distance to object S based on the light receiving signal generated by the light receiving unit 6. The storage unit 8 stores information on the monitoring area 4 set in advance in the detection area 3. The determination output unit 9 determines entry of the object S into the monitoring area 4 and outputs a control signal. The determination by the determination output unit 9 as to whether the object S has entered the monitoring area 4 is based on the distance calculated by the calculation unit 7 and the scanning angle of the detection light 20 scanned by the scanning unit 5.

As illustrated in FIGS. 15 and 16, the light projecting unit 10 includes the first light projecting unit 11 and the second light projecting unit 12. The first light projecting unit 11 projects the first detection light 21. The second light projecting unit 12 is arranged at a position spatially separated from the first light projecting unit 11. The second light projecting unit 12 projects the second detection light 22 from a position spatially separated from the first detection light 21. The first detection light 21 and the second detection light 22 constitute the detection light 20 projected from the light projecting unit 10.

According to the configuration of the scanner 1 described above, since the first detection light 21 and the second detection light 22 are spatially separated from each other, as illustrated in FIG. 15, the object S can reflect both the first detection light 21 and the second detection light 22 to the light receiving unit 6. On the other hand, as illustrated in FIG. 16, the minite object m does not reflect both the first detection light 21 and the second detection light 22 to the light receiving unit 6. Therefore, the scanner 1 can reduce the possibility of erroneously determining the minute object m that is not the object to be detected while appropriately determining the object S that is the object to be detected.

Incidentally, the detection light 20 is, for example, laser light. The number of pieces of the detection light 20 is not limited to only two (only the first detection light 21 and the second detection light 22), and may be three or more. That is, in addition to the first detection light 21 and the second detection light 22, third detection light (not illustrated) or the like may also constitute the above-described detection light 20.

The scanner 1 may be a safety scanner 1 (also referred to as a safety scanner). The safety scanner 1 is used in cooperation with an external facility that requires an emergency stop at the time of danger. The external facility is a machine tool, an industrial robot, an automatic guided vehicle (AGV), or the like.

In the safety scanner 1, the control signal output from the determination output unit 9 is a signal for emergently stopping an external facility, that is, a safety control signal. Specifically, the safety control signal is, for example, an output signal switching device (OSSD) or the like. The safety scanner 1 is connected to a safety control device that controls an external facility such as a programmable logic controller (PLC).

When determining the entry of the object S into the monitoring area 4, the safety scanner 1 switches the OSSD from on to off. The safety control device (for example, PLC) that has received the off of the OSSD stops the operation of the external facility.

Next, a further configuration of the scanner 1 described above will be described in detail with reference to FIGS. 15 and 16.

As illustrated in FIGS. 15 and 16, the scanning unit 5 scans the first detection light 21 projected by the first light projecting unit 11 and the second detection light 22 projected by the second light projecting unit 12 in the circumferential direction. Each of the first detection light 21 and the second detection light 22 is scanned in the circumferential direction, so that the monitoring area 4 can be set in a wide range.

Meanwhile, the scanner 1 illustrated in FIGS. 15 and 16 performs two-dimensional scanning in which the detection light 20 is scanned on a specific surface (including a thickness). The scanner 1 is not limited to one that performs two-dimensional scanning, and may perform three-dimensional scanning in which the detection light 20 is scanned on a specific surface and a surface (including a thickness) intersecting the specific surface.

As illustrated in FIGS. 15 and 16, the determination output unit 9 determines the entry of the object S into the monitoring area 4 based on a plurality of distances calculated by the calculation unit 7 according to each of the first detection light 21 and the second detection light 22.

For example, the scanner 1 illustrated in FIG. 15 determines the entry of the object S into the monitoring area 4 based on the distance (hereinafter, the first distance measurement value) calculated by the calculation unit 7 according to the first detection light 21 and the distance (hereinafter, the second distance measurement value) calculated by the calculation unit 7 according to the second detection light 22. The distance for determining the entry of the object S into the monitoring area 4 is not limited to two of the first distance measurement value and the second distance measurement value, and may be three or more. The three or more distances are, for example, a distance calculated according to the above-described third detection light or the like, a distance calculated according to the detection light 20 of the adjacent optical axes, or the like.

By determining the entry of the object S into the monitoring area 4 on the basis of the plurality of distances, the scanner 1 can reduce the possibility of erroneously determining the minute object m that is not the object to be detected while appropriately determining the object S that is the object to be detected.

When at least two of the plurality of distances described above indicate the entry of the object S into the monitoring area 4, the determination output unit 9 determines that the object S has entered the monitoring area 4.

For example, when all of the plurality of distances indicate the entry of the object S into the monitoring area 4, it may be determined that the object S has entered the monitoring area 4. Alternatively, it may be determined that the object S has entered the monitoring area 4 when at least two distances excluding distances not suitable for the determination among the plurality of distances indicate the entry of the object S.

By determining that the object S has entered the monitoring area 4 when at least two of the plurality of distances described above indicate the entry of the object S into the monitoring area 4, the scanner 1 can reduce the possibility of erroneously determining the minute object m that is not the object to be detected while appropriately determining the object S that is the object to be detected.

Incidentally, the light projecting unit 10 has been described as including the first light projecting unit 11 and the second light projecting unit 12, but may also include a third light projecting unit or the like (not illustrated) that projects the above-described third detection light or the like. The third light projecting unit and the like are also arranged at positions spatially separated from each of the first light projecting unit 11 and the second light projecting unit 12. In addition to the first distance measurement value and the second distance measurement value, the calculation unit 7 also calculates a distance corresponding to the third detection light or the like projected from the third light projecting unit or the like.

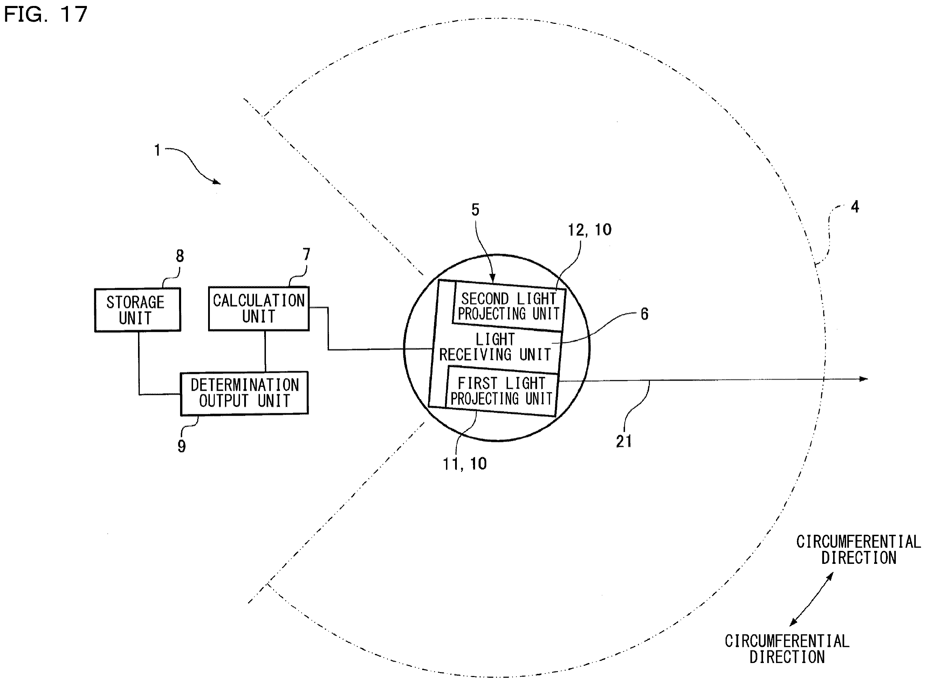

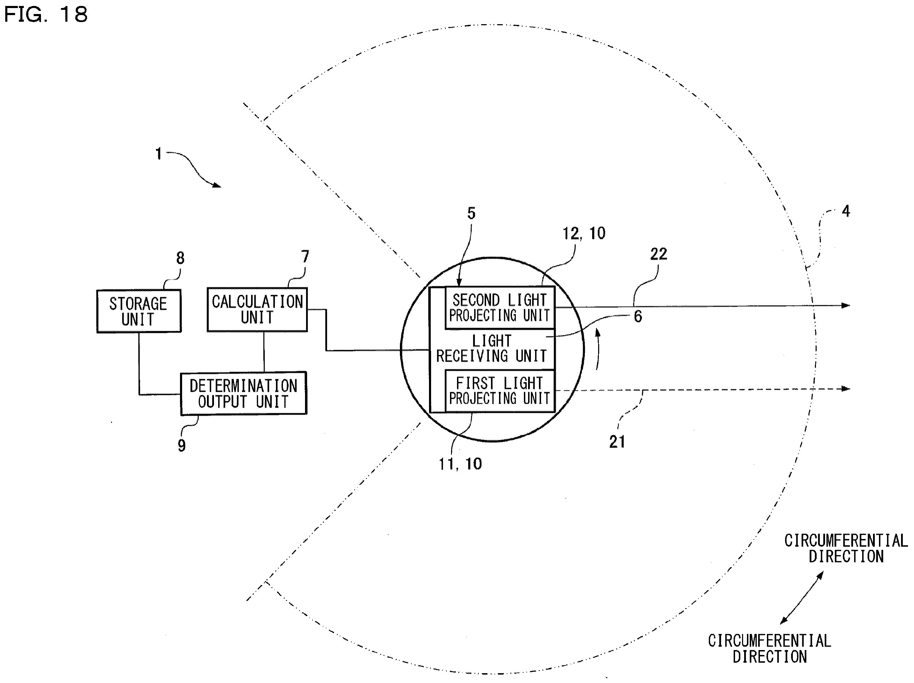

Next, an example in which the first detection light 21 is projected and the second detection light 22 is projected after a short time will be described with reference to FIGS. 17 and 18. FIG. 17 is a schematic plan view of the scanner 1 in a state where only the first detection light 21 is projected. FIG. 18 is a schematic plan view of the scanner 1 in a state where only the second detection light 22 is projected after a short time from FIG. 17.

As illustrated in FIGS. 17 and 18, the light projecting unit 10 makes the light projection timing of the first detection light 21 by the first light projecting unit 11 different from the light projection timing of the second detection light 22 by the second light projecting unit 12. As illustrated in FIG. 17, the second detection light 22 is not sent from the second light projecting unit 12 at the projecting timing of the first detection light 21 by the first light projecting unit 11. After a short time from the state of FIG. 17, as illustrated in FIG. 18, the first detection light 21 is not projected from the first light projecting unit 11 at the projecting timing of the second detection light 22 by the second light projecting unit 12.

Since the light projection timings of the first detection light 21 and the second detection light 22 are different, the reflected light 30 obtained by reflecting the first detection light 21 on the object S and the reflected light 30 obtained by reflecting the second detection light 22 on the object S reach the light receiving unit 6 at different times. Therefore, even if only one light receiving unit 6 receives the reflected light 30, it is possible to identify which one of the first detection light 21 and the second detection light 22 the received reflected light 30 is based on the time for receiving the reflected light 30. Therefore, since it is sufficient for the scanner 1 to include one light receiving unit 6, the configuration can be simplified.

Meanwhile, as the scanner 1 illustrated in FIGS. 11, 12, 17, and 18, the configuration in which the first detection light 21 is projected and the second detection light 22 is projected after a short time has been described, but a configuration in which the second detection light 22 is projected and the first detection light 21 is projected after the short time may be used.

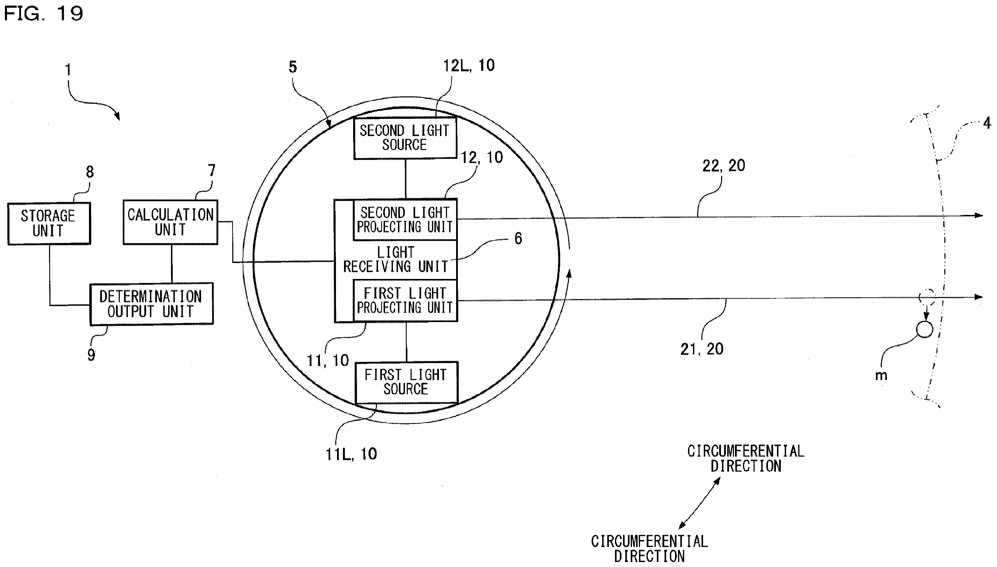

Next, a further configuration of the scanner 1 described above will be described in detail with reference to FIG. 19. FIG. 19 is a schematic enlarged plan view of the scanner 1 before and after the detection light 20 is scanned by one rotation in the circumferential direction.

As illustrated in FIG. 19, the first light projecting unit 11 projects the first detection light 21 a plurality of times in the same direction, and the second light projecting unit 12 projects the second detection light 22 a plurality of times in the same direction. That is, the first detection light 21 is projected in the same direction at scanning angles of 360°. The second detection light 22 is also projected in the same direction at scanning angles of 360°. Note that the direction in which the first detection light 21 is projected and the direction in which the second detection light 22 is projected are not limited to being the same.

During scanning of the detection light 20 by 360° (or 360°×M, where M is a natural number) in the circumferential direction, that is, during scanning of the detection light 20 by one rotation (or M rotations) in the circumferential direction, a lightweight object such as the minute object m usually moves without staying in the same place. Therefore, even if the minute object m reflects the first detection light 21, the minute object m does not normally reflect the first detection light 21 scanned by 360°(or 360°×M) in the circumferential direction thereafter. Similarly, even if the minute object m reflects the second detection light 22, the minute object m does not normally reflect the second detection light 22 scanned by 360°(or 360°×M) in the circumferential direction thereafter. Therefore, the scanner 1 can reduce the possibility of erroneously determining the minute object m that is not the object to be detected while appropriately determining the object S that is the object to be detected.

The time for determining the object S, that is, the response time is set by the user. This response time is the maximum time during which the minute object m is assumed to start moving in detection, in other words, the time during which the minute object m is assumed to move in detection if it is equal to or longer than the time interval. For example, in a case where the response time is set to 120msec by the user and 40msec is required for scanning of one rotation (one scan), even if the minute object m is detected continuously in the same direction during two rotations (80msec/40msec rotation), the OSSD is not switched from on to off, and when the minute object m is detected continuously in the same direction during three rotations (120msec/40msec rotation), the OSSD is switched from on to off. Therefore, the scanner 1 detects some minute object m continuously in the same direction during three rotations (during three scans), and determines for the first time that the object S exists.

As illustrated in FIG. 19, the light projecting unit 10 further includes a first light source 11L that generates the first detection light 21 and a second light source 12L that generates the second detection light 22. The second light source 12L is a light source different from the first light source 11L. The first light source 11L and the second light source 12L are, for example, laser diodes (LDs) that generate laser light.

Since the first light source 11L and the second light source 12L are different light sources, the first detection light 21 from the first light source 11L and the second detection light 22 from the second light source 12L are spatially separated with a simple configuration. Therefore, the configuration of the scanner 1 can be simplified by including the first light source 11L and the second light source 12L. Note that, in a case where the number of pieces of the detection light 20 is three or more, that is, in a case where the detection light 20 is present other than the first detection light 21 and the second detection light 22, the light projecting unit 10 may include light sources different by the number of the detection light 20.

Although not illustrated, the light projecting unit 10 may be configured to cause the first detection light 21 and the second detection light 22 to be projected from one light source to the first light projecting unit 11 and the second light projecting unit 12. In this configuration, for example, light from one light source is divided into two by a light refracting body (prism or the like) and provided to the first light projecting unit 11 and the second light projecting unit 12. Note that, in a case where the number of pieces of the detection light 20 is three or more, that is, in a case where the detection light 20 is present other than the first detection light 21 and the second detection light 22, the light refracting body (prism or the like) may divide the light from one light source by the number of pieces of the detection light 20.

As illustrated in FIG. 19, the first light projecting unit 11 and the second light projecting unit 12 are arranged at spatially separated positions such that the first detection light 21 and the second detection light 22 are separated from each other in the circumferential direction. Since the separation between the first detection light 21 and the second detection light 22 is in the circumferential direction, the scanner 1 is suitable for a case where a long object orthogonal to the circumferential direction, such as a human leg that might enter the monitoring area 4, is the object S.

The first detection light 21 and the second detection light 22 illustrated in FIGS. 15 to 19 have parallel axes, but are not limited thereto. For example, the axis of each of the first detection light 21 and the second detection light 22 may be widened or narrowed away from the light projecting unit 10.

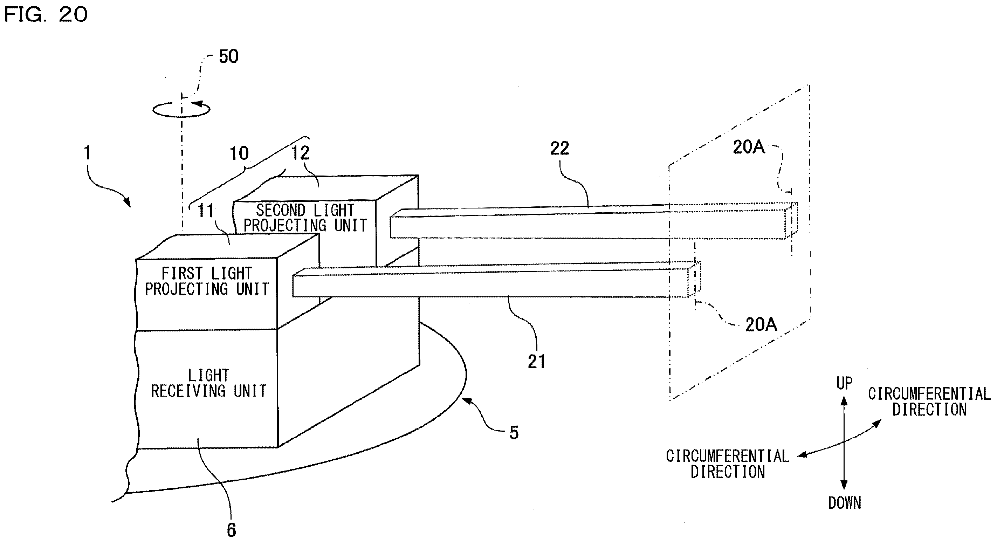

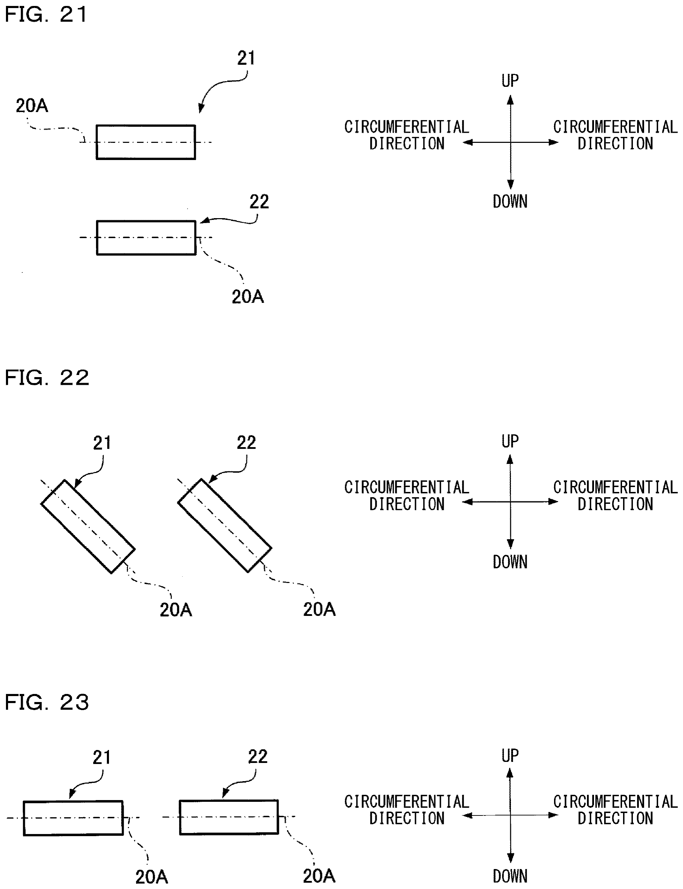

Next, the transverse shapes of the first detection light 21 and the second detection light 22 will be described with reference to FIGS. 20 to 23. FIG. 20 is a schematic perspective view illustrating transverse shapes of the first detection light 21 and the second detection light 22. FIG. 21 is a transverse sectional view illustrating transverse shapes of the first detection light 21 and the second detection light 22 having a positional relationship different from that in FIG. 20. FIG. 22 is a transverse sectional view illustrating transverse shapes of the first detection light 21 and the second detection light 22 in a positional relationship different from those in FIGS. 20 and 21. FIG. 23 is a transverse sectional view illustrating transverse shapes of the first detection light 21 and the second detection light 22 in a positional relationship different from that in FIGS. 20 to 22.

As illustrated in FIG. 20, the first detection light 21 and the second detection light 22 have a long axis 20A in each transverse shape. The long axis 20A in the transverse shape of the first detection light 21 and the long axis 20A in the transverse shape of the second detection light 22 are on different straight lines.

The transverse shapes of the first detection light 21 and the second detection light 22 extend in the direction along each long axis 20A as the distance from the light projecting unit 10 increases. However, since the long axes 20A are on different straight lines, in other words, not on the same straight line, the first detection light 21 and the second detection light 22 are less likely to overlap even if separated from the light projecting unit 10. Therefore, since the scanner 1 easily maintains the spatial separation even if the first detection light 21 and the second detection light 22 are separated from the light projecting unit 10, it is possible to reduce the possibility of erroneously determining the minute object m that is not the object to be detected while appropriately determining the object S that is the object to be detected.

As illustrated in FIG. 20, each long axis 20A is parallel along a direction orthogonal to the circumferential direction, that is, parallel along the vertical direction. Since the long axes 20A are parallel to each other, even if the first detection light 21 and the second detection light 22 are separated from the light projecting unit 10, they are less likely to overlap each other. Therefore, the scanner 1 can reduce the possibility of erroneously determining the minute object m that is not the object to be detected while appropriately determining the object S that is the object to be detected.

In the transverse shape of each of the first detection light 21 and the second detection light 22, for example, the long side length along the direction of the long axis 20A is about 70 µm to 225 µm, and the short side length along the direction orthogonal to the long axis 20A is about 10 µm. The long side length of the long axis 20A increases as the distance from the light projecting unit 10 increases as described above, and increases as the outputs of the first light source 11L and the second light source 12L increase.

As illustrated in FIGS. 21 and 22, each long axis 20A may be parallel along the circumferential direction (see FIG. 21) or may be parallel along a direction inclined in the circumferential direction (see FIG. 22). Since the long axes 20A illustrated in FIGS. 21 and 22 are parallel to each other, even if the first detection light 21 and the second detection light 22 are separated from the light projecting unit 10, they are less likely to overlap each other. Therefore, the scanner 1 can reduce the possibility of erroneously determining the minute object m that is not the object to be detected while appropriately determining the object S that is the object to be detected.

As illustrated in FIG. 23, although not particularly preferable, the long axes 20A may be on the same straight line. From the viewpoint that the first detection light 21 and the second detection light 22 are less likely to overlap even if separated from the light projecting unit 10, the example illustrated in FIGS. 20 to 22 in which the long axes 20A are not on the same straight line is more preferable than the example illustrated in FIG. 23 in which the long axes 20A are on the same straight line. Note that the present invention is not limited to the examples illustrated in FIGS. 20 to 23, and it is sufficient that the first detection light 21 and the second detection light 22 are spatially separated from each other. Furthermore, the examples illustrated in FIGS. 20 and 21 are suitable for the above-described three-dimensional scan.

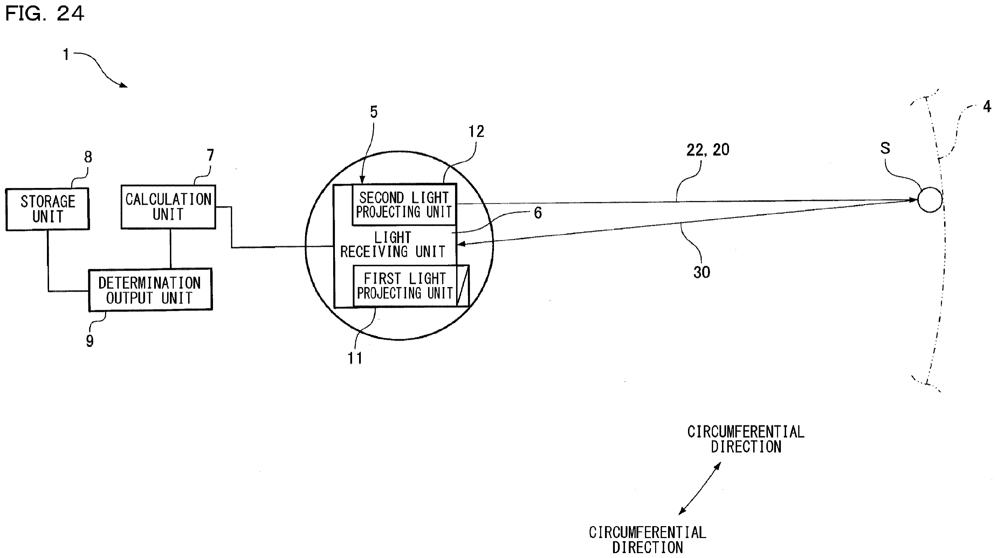

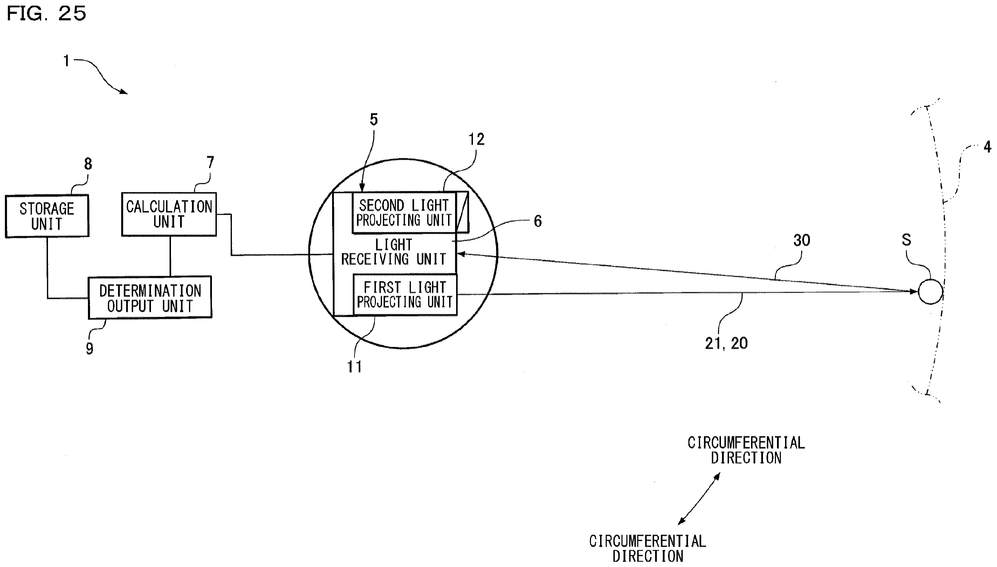

Next, an example in which the projection of the first detection light 21 or the second detection light 22 is stopped will be described with reference to FIGS. 24 and 25. FIG. 24 is a schematic enlarged plan view of a state in which the projection of the first detection light 21 is stopped. FIG. 25 is a schematic enlarged plan view of a state in which the projection of the second detection light 22 is stopped.

As illustrated in FIGS. 24 and 25, the light projecting unit 10 can stop the projection of either the first detection light 21 or the second detection light 22. In a case where the object S that is the object to be detected is smaller than the interval between the spatially separated first detection light 21 and second detection light 22, it may not be determined as the object S. In this case, even a small object S can be detected by stopping the projection of either the first detection light 21 or the second detection light 22.

In a case where the number of pieces of the detection light 20 is three or more on a specific optical axis, it is sufficient that at least the first detection light 21 or the second detection light 22 is stopped, but preferably, only one piece of detection light 20 is projected, and all the other light projecting is stopped.

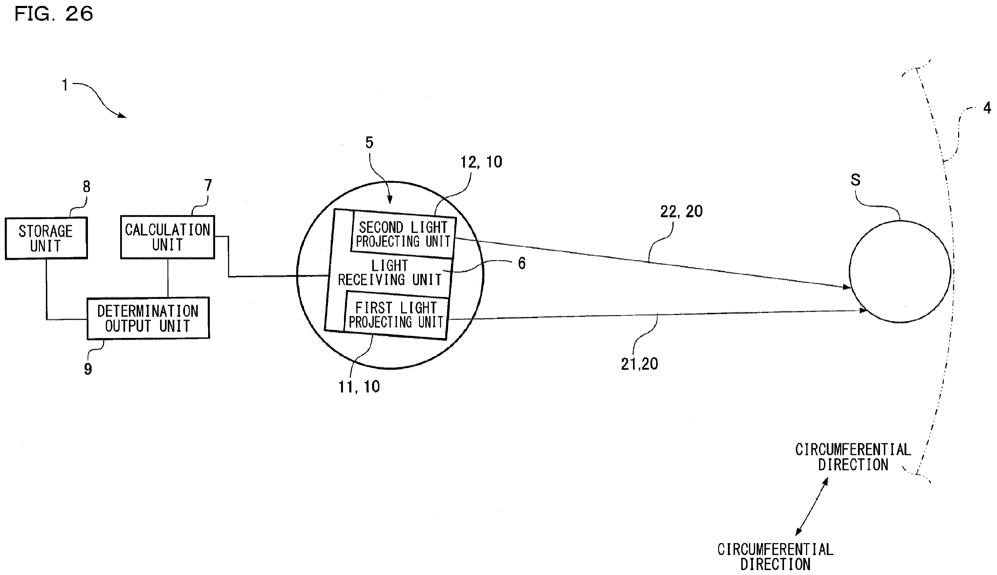

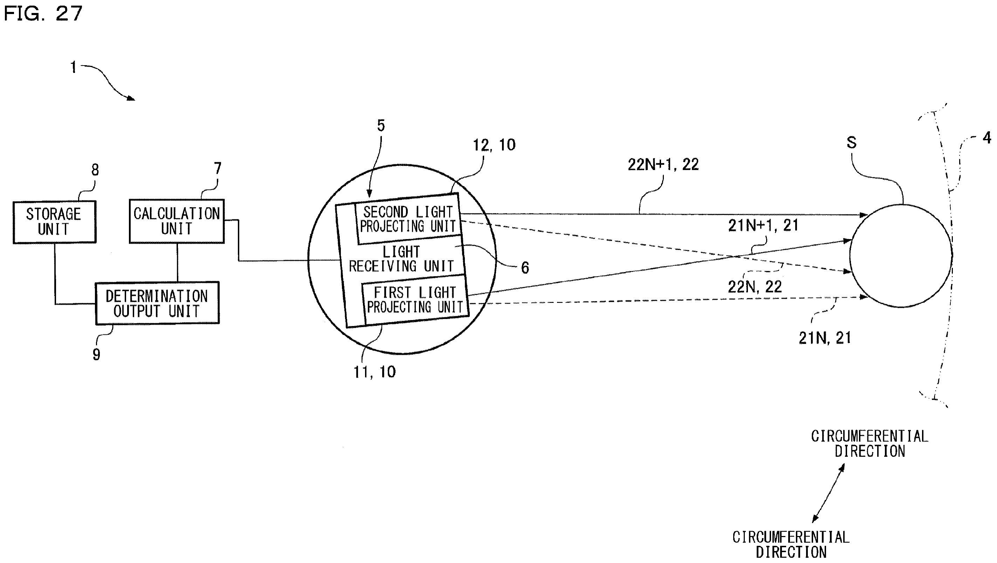

Hereinafter, the scanner 1 that determines the object S with the detection light 20 at an arbitrary light projection timing and the next light projection timing will be described with reference to FIGS. 26 and 27.

FIG. 26 is an enlarged schematic plan view of the scanner 1 in a state in which the first detection light 21 and the second detection light 22 are projected, the axes of the first detection light 21 and the second detection light 22 being narrowed as the distance from the light projecting unit 10 increases. FIG. 27 is a schematic enlarged plan view of the scanner 1 in a state where the first detection light 21N+1 and the second detection light 22N+1 are projected at the next light projection timing of FIG. 26.

Among the first detection light 21 and the second detection light 22 at an arbitrary light projection timing illustrated in FIG. 26 and the first detection light 21N+1 and the second detection light 22N+1 at a next light projection timing illustrated in FIG. 27, the detection lights 21N and 22N+1 at both ends in the circumferential direction are spatially separated in the monitoring area 4.

In the example illustrated in FIGS. 26 and 27, the detection lights 21N and 22N+1 at both ends in the circumferential direction are the first detection light 21N at an arbitrary light projection timing (N optical axis) and the second detection light 22N+1 at the next light projection timing (N+1 optical axis).

As illustrated in FIG. 27, when the detection lights 21N and 22N+1 at both ends in the circumferential direction are spatially separated from each other in the monitoring area 4, even a minute object m larger than the interval between the first detection light 21N and the second detection light 22N at an arbitrary light projection timing (N optical axis) can be prevented from being erroneously determined as the object S.

The light projecting unit 10 sets a light projection timing at which the detection light 20 is projected. Specifically, the first light projecting unit 11 sets a light projection timing at which the first detection light 21 is projected. The second light projecting unit 12 sets a light projection timing at which the second detection light 22 is projected.

In the light projection timing set by the light projecting unit 10, the interval between the detection lights 21N and 22N+1 at both ends in the circumferential direction which are spatially separated is set to be equal to or less than the minimum detection object that is the smallest object S among the objects S determined to enter by the determination output unit 9 in the monitoring area 4.

With this configuration, the scanner 1 can set the object S larger than the interval between the first detection light 21N and the second detection light 22N at an arbitrary light projection timing (N optical axis) as the minimum detection object. For example, in a case where a sphere having a diameter of 10 mm is set as the minimum detection object, in other words, in a case where a sphere having a diameter of less than 10 mm is set as the minute object m, the light projection timing based on the scanning angular velocity is determined such that the interval between the detection lights 21N and 22N+1 at both ends in the circumferential direction which are spatially separated becomes 10 mm.

In the example illustrated in FIG. 27, when the entry of the object S into the monitoring area 4 is indicated based on all (four) of the first detection light 21N and the second detection light 22N on the N optical axis and the first detection light 21N+1 and the second detection light 22N+1 on the N+1 optical axis, it is determined that the object S has entered the monitoring area 4.

Incidentally, in FIG. 27, the axes of the detection lights 21N and 22N+1 at both ends in the circumferential direction are illustrated as parallel, but may be widened or narrowed as the distance from the light projecting unit 10 increases.

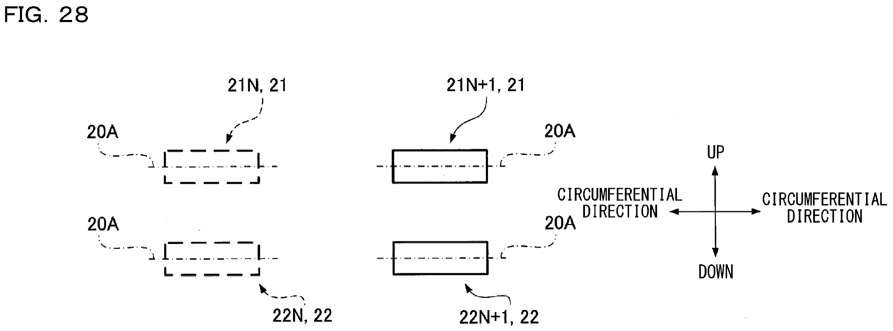

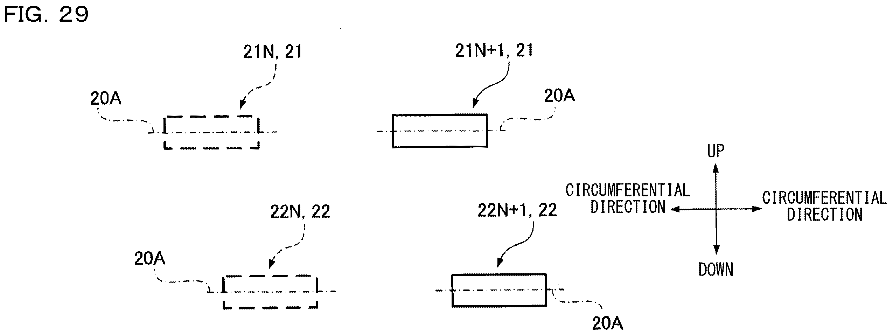

Next, the transverse shapes of the first detection light 21 and the second detection light 22 at an arbitrary light projection timing and the transverse shapes thereof at the next light projection timing will be described with reference to FIGS. 28 and 29.

FIGS. 28 and 29 illustrate a state in which the first detection light 21 and the second detection light 22 are separated in the vertical direction, not a state in which the first detection light 21 and the second detection light 22 are separated in the circumferential direction as illustrated in FIGS. 26 and 27. FIG. 28 is a transverse sectional view illustrating a transverse shape in a state in which the first detection light 21 and the second detection light 22 are projected simultaneously. FIG. 29 is a transverse sectional view illustrating a transverse shape in a state in which the first detection light 21 is projected and the second detection light 22 is projected after a short time.

In the example illustrated in FIG. 28, the first detection light 21N and the second detection light 22N are simultaneously projected on the N optical axis, and the first detection light 21N+1 and the second detection light 22N+1 are simultaneously projected on the N+1 optical axis. Therefore, the detection light at both ends in the circumferential direction is either the first detection light 21N or the second detection light 22N on the N optical axis and either the first detection light 21N+1 or the second detection light 22N+1 on the N+1 optical axis.

In the example illustrated in FIG. 29, the first detection light 21 is projected on both the N optical axis and the N+1 optical axis, and the second detection light 22 is projected after a short time. Therefore, the detection lights 21N and 22N+1 at both ends in the circumferential direction are the first detection light 21N on the N optical axis and the second detection light 22N+1 on the N+1 optical axis.

### <First Embodiment>

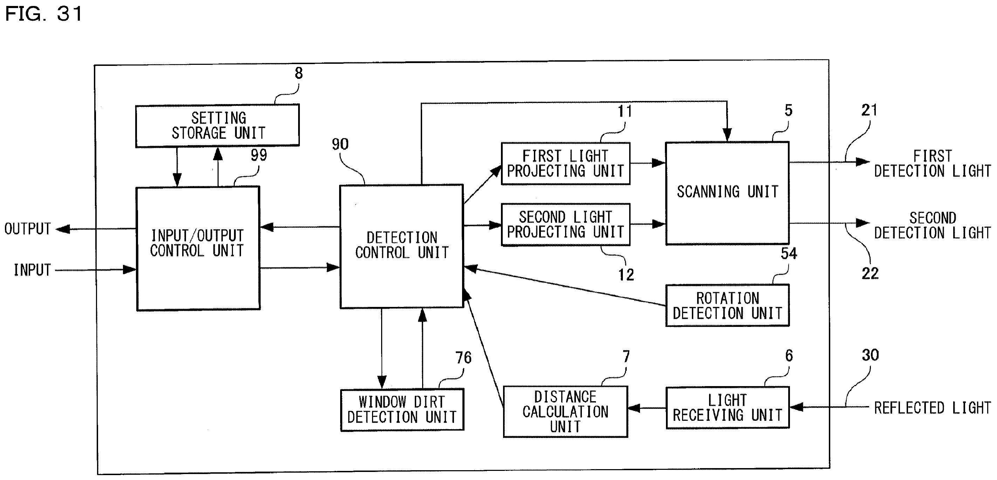

Hereinafter, a scanner 1 according to a first embodiment including the gist of the present invention described above will be described with reference to FIGS. 30 and 31. FIG. 30 is a longitudinal sectional view of the scanner 1 according to the first embodiment. FIG. 31 is a block diagram of the scanner 1 according to the first embodiment.

As illustrated in FIG. 30, the scanner 1 according to the first embodiment rotates a mirror 58 that reflects the detection light 20 from the light projecting unit 10 and the reflected light 30 from the object S without rotating the light projecting unit 10 and the light receiving unit 6.

The scanner 1 according to the first embodiment includes a lower casing 70 and an upper casing 40 as casings. The upper casing 40 is installed on the lower casing 70.

The lower casing 70 accommodates the light projecting unit 10, the light receiving unit 6, a window dirt detection unit 76, an input/output control unit 99, and a detection control unit 90. The lower casing 70 further includes an upper plate 71. The upper plate 71 includes a central transmission portion 72 and a plurality of peripheral transmission portions 73.

The central transmission portion 72 is located near the center of the upper plate 71 in plan view. The plurality of peripheral transmission portions 73 are located around the central transmission portion 72 in the upper plate 71. The central transmission portion 72 transmits the detection light 20 and the reflected light 30, and thus has a larger area than the peripheral transmission portion 73. The peripheral transmission portion 73 transmits only light for detecting window dirt, and thus has a smaller area than the central transmission portion 72.

The light projecting unit 10 and the light receiving unit 6 are disposed below the central transmission portion 72. Specifically, the light projecting unit 10 is arranged such that the detection light 20 to be projected is transmitted through the central transmission portion 72 from the bottom to the top. The light receiving unit 6 is disposed between the first light projecting unit 11 and the second light projecting unit 12.

The first light projecting unit 11 includes a first light projecting element 11L corresponding to the first light source 11L described above, and a first light projecting lens 111 that condenses the first detection light 21. The second light projecting unit 12 includes a second light projecting element 12L corresponding to the above-described second light source 12L, and a second light projecting lens 112 that condenses the second detection light 22. The first light projecting lens 111 and the second light projecting lens 112 are arranged between the first light projecting element 11L and the second light projecting element 12L and the central transmission portion 72, respectively.

The light receiving unit 6 includes a light receiving lens 61 that collects the reflected light 30 and a light receiving element 63 that receives the reflected light 30 collected by the light receiving lens 61. The light receiving lens 61 is disposed between the light receiving element 63 and the central transmission portion 72. The light receiving element 63 generates a light receiving signal by receiving the reflected light 30. Note that a portion having a linear Fresnel shape may be provided on the back surface side (the side where the light receiving element 63 is present) of the light receiving lens 61. As a result, the light beam of the reflected light 30 can be directed to the light receiving element 63 while being diffused. That is, since the scanner 1 generally needs to reliably detect the object S having a predetermined reflectance or more, sufficient sensitivity is required to enable detection even in consideration of individual variations, temperature characteristics, and the like. On the other hand, the excessive sensitivity may detect unnecessary objects (such as dust and dirt) such as the minute object m, which may cause a problem in availability. Therefore, a portion having the above-described linear Fresnel shape may be provided in order to adjust the light amount so that the specification of the distance-light reception amount is as flat as possible so that the minimum required detection sensitivity can be obtained between a short distance and a long distance.

The distance calculation unit 7, which is an example of the calculation unit 7 described above, is electrically connected to the light receiving element 63. The distance calculation unit 7 calculates the distance to the object S or the minute object m based on the light receiving signal from the light receiving element 63.

The window dirt detection unit 76 is disposed below the peripheral transmission portion 73. In other words, in the lower casing 70, the window dirt detection unit 76 is disposed around the light projecting unit 10 and the light receiving unit 6. The window dirt detection unit 76 includes a detection element 77 and a detection substrate 78.

The input/output control unit 99 and the detection control unit 90 perform control necessary for detecting and determining the object S and control necessary for preventing erroneous determination of the minute object m. Each of the input/output control unit 99 and the detection control unit 90 is a field programmable gate array (FPGA), a microcontroller, or the like. The input/output control unit 99 and the detection control unit 90 constitute the determination output unit 9 described above.

The upper casing 40 includes a transmission window 41 and a top plate 42. The transmission window 41 has a side surface shape of an inverted truncated cone, and constitutes a side surface portion of the upper casing 40. The transmission window 41 is attached between the central transmission portion 72 and the peripheral transmission portion 73 of the upper plate 71 in the lower casing 70. A portion of the transmission window 41 that transmits the detection light 20 and the reflected light 30 is located above the peripheral transmission portion 73. The top plate 42 seals an upper end of the transmission window 41.

The upper casing 40 accommodates the fixed portion and the rotating portion. The fixed portion includes a back surface body 51, a detection reference plate 52, a motor 53 (excluding a drive unit not illustrated), and a rotation detection unit 54 (for example, a rotary encoder). The back surface body 51 rises from the upper plate 71 of the lower casing 70. The detection reference plate 52 is attached to a central portion of the back surface body 51. The detection reference plate 52 includes a white portion and a black portion on a surface facing the rotating portion. The motor 53 is provided on an upper part of the back surface body 51. The motor 53 rotates a rotating portion by a drive unit (not illustrated). The rotation detection unit 54 is provided between the detection reference plate 52 and the motor 53 on the back surface body 51. The rotation detection unit 54 detects the rotation amount of the rotating portion in order to obtain the above-described scanning angle.

The rotating portion includes a drive unit of the motor 53, a rotation shaft portion 55, a rotating disk 56, a rotating body 57, and a mirror 58. The rotation shaft portion 55 is connected to the drive unit of the motor 53 and is driven by the motor 53. The rotating disk 56 causes the rotation shaft portion 55 to pass therethrough and rotates together with the rotation shaft portion 55. The edge of the rotating disk 56 is detected by the rotation detection unit 54. The rotating body 57 is connected to the rotation shaft portion 55 and rotates together with the rotation shaft portion 55. The mirror 58 is attached to an inclined surface of the rotating body 57. The mirror 58 reflects the detection light 20 from the light projecting unit 10 toward the monitoring area 4 and reflects the reflected light 30 from the monitoring area 4 toward the light receiving unit 6.

In the scanner 1 according to the first embodiment, the above-described rotating body 57 corresponds to a rotating member that rotates about the rotation axis 50. Therefore, in the scanner 1 according to the first embodiment, the scanning unit 5 includes a rotating member (rotating body 57) that rotates about the rotation axis 50, and the mirror 58 is fixed to the rotating member (rotating body 57). The mirror 58 guides the first detection light 21 and the second detection light 22 projected from each of the first light projecting unit 11 and the second light projecting unit 12 into the detection area 3, and guides the reflected light 30 reflected by the object S in the detection area 3 to the light receiving unit 6.

As illustrated in FIG. 31, the input/output control unit 99 receives an input signal from the outside and outputs a control signal to the outside. The setting storage unit 8 (an example of the storage unit 8 described above) stores information set by the user. The setting storage unit 8 is electrically connected to the input/output control unit 99. Although not illustrated, the setting storage unit 8 may be electrically connected to the detection control unit 90.

The detection control unit 90 transmits a signal for projecting the first detection light 21 and the second detection light 22 to the first light projecting unit 11 and the second light projecting unit 12. The detection control unit 90 transmits a signal for rotating the rotating portion to the scanning unit 5. The detection control unit 90 receives a signal including information of a scanning angle from the rotation detection unit 54. The detection control unit 90 receives a signal including information on the first distance measurement value and the second distance measurement value from the distance calculation unit 7. The detection control unit 90 transmits a signal to the window dirt detection unit 76 to operate the window dirt detection unit 76, and receives a signal including information that the transmission window 41 is dirty from the window dirt detection unit 76. The detection control unit 90 determines the entry of the object S into the monitoring area 4 while identifying the object S and the minute object m from the received signal group.

As described above, according to the scanner 1 according to the first embodiment, it is possible to reduce the possibility of erroneously determining the minute object m that is not the object to be detected while appropriately determining the object S that is the object to be detected without rotating the light projecting unit 10 and the light receiving unit 6.

### <Second Embodiment>

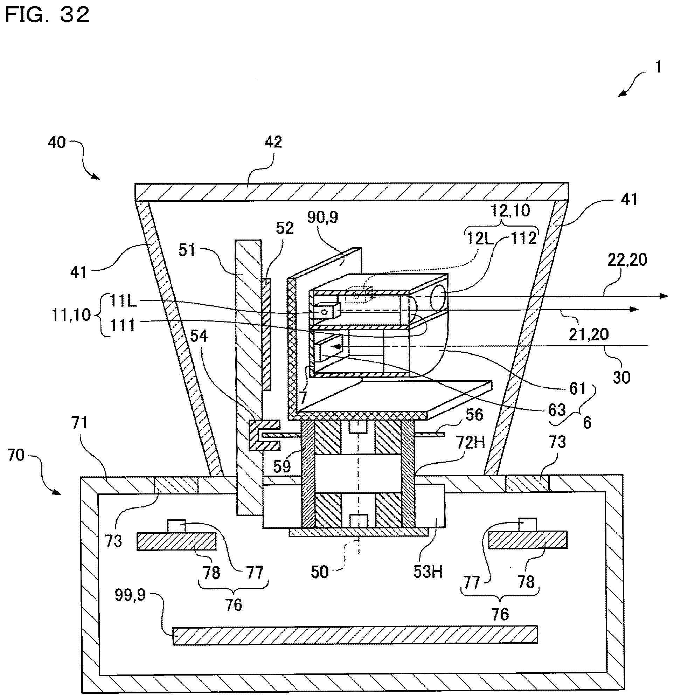

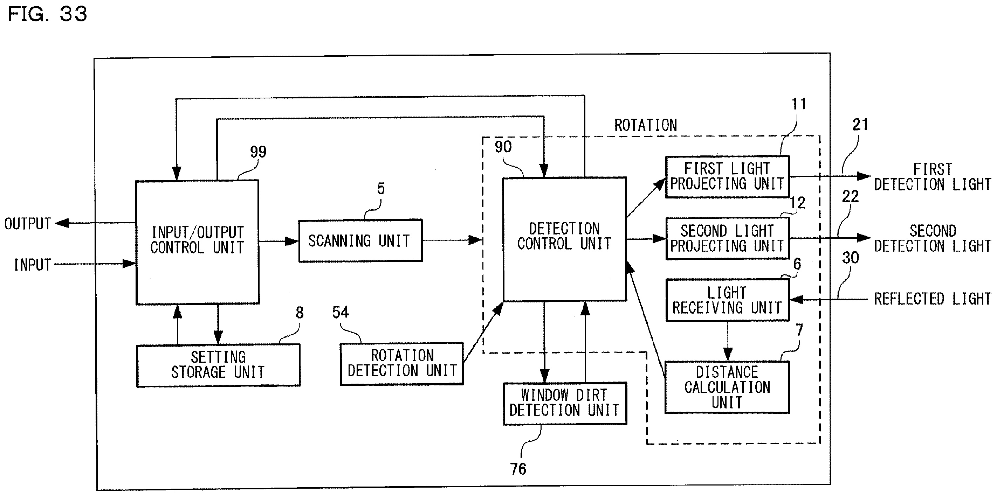

Hereinafter, a scanner 1 according to a second embodiment including the gist of the present invention described above will be described with reference to FIGS. 32 and 33. FIG. 32 is a longitudinal sectional view of the scanner 1 according to the second embodiment. FIG. 33 is a block diagram of the scanner 1 according to the second embodiment.

As illustrated in FIG. 32, the scanner 1 according to the second embodiment rotates the light projecting unit 10 and the light receiving unit 6.

The scanner 1 according to the second embodiment includes a lower casing 70 and an upper casing 40 as casings. The upper casing 40 is installed on the lower casing 70.

The lower casing 70 houses a lower part of a wireless unit 59, a hollow motor 53H, a window dirt detection unit 76, and an input/output control unit 99. The lower casing 70 further includes an upper plate 71. The upper plate 71 includes a central opening 72H and a plurality of peripheral transmission portions 73.

The central opening 72H is located in the vicinity of the center of the upper plate 71 in plan view. The plurality of peripheral transmission portions 73 are located around the central opening 72H in the upper plate 71. Since the wireless unit 59 penetrates the central opening 72H, the central opening 72H has a larger area than the peripheral transmission portion 73. The peripheral transmission portion 73 transmits only light for detecting window dirt, and thus has a smaller area than the central opening 72H.

The wireless unit 59 performs wireless power supply and optical communication between a lower portion and an upper portion thereof. A lower part of the wireless unit 59 is housed in the lower casing 70, and an upper part of the wireless unit 59 is housed in the upper casing 40. An upper part of the wireless unit 59 is rotatable about a rotation axis 50 with respect to a lower part of the wireless unit 59.

The hollow motor 53H is disposed around the outer periphery of the lower portion of the wireless unit 59. The hollow motor 53H rotates the upper portion of the wireless unit 59 by a drive unit (not illustrated). The drive unit of the hollow motor 53H is a rotatable cylindrical body also referred to as a rotor.

The window dirt detection unit 76 is disposed below the peripheral transmission portion 73. In other words, in the lower casing 70, the window dirt detection unit 76 is disposed around a lower part of the wireless unit 59. The window dirt detection unit 76 includes a detection element 77 and a detection substrate 78.

The input/output control unit 99 is housed in the lower casing 70 as in the first embodiment, but the detection control unit 90 is housed in the upper casing 40 unlike the first embodiment. The input/output control unit 99 and the detection control unit 90 perform control necessary for detecting and determining the object S and control necessary for preventing erroneous determination of the minute object m. Each of the input/output control unit 99 and the detection control unit 90 is a field programmable gate array (FPGA), a microcontroller, or the like. The input/output control unit 99 and the detection control unit 90 constitute the determination output unit 9 described above.

The upper casing 40 includes a transmission window 41 and a top plate 42. The transmission window 41 has a side surface shape of an inverted truncated cone, and constitutes a side surface portion of the upper casing 40. The transmission window 41 is attached between the central opening 72H of the upper plate 71 and the peripheral transmission portion 73 in the lower casing 70. A portion of the transmission window 41 that transmits the detection light 20 and the reflected light 30 is located above the peripheral transmission portion 73. The top plate 42 seals an upper end of the transmission window 41.

The upper casing 40 accommodates the fixed portion and the rotating portion. The fixed portion includes a back surface body 51, a rotation detection unit 54 (for example, a rotary encoder), and a detection reference plate 52. The back surface body 51 rises from the upper plate 71 of the lower casing 70. The rotation detection unit 54 is provided in a lower portion of the back surface body 51. The rotation detection unit 54 detects the rotation amount of the rotating portion in order to obtain the above-described scanning angle. The detection reference plate 52 is attached from a central portion to an upper portion of the back surface body 51. The detection reference plate 52 includes a white portion and a black portion on a surface facing the rotating portion.

The rotating portion includes an upper portion of the wireless unit 59, a rotating disk 56, the detection control unit 90, the light projecting unit 10, and the light receiving unit 6. The rotating disk 56 is attached to the outer periphery of the upper portion of the wireless unit 59 and rotates together with the upper portion of the wireless unit 59. The edge of the rotating disk 56 is detected by the rotation detection unit 54. The detection control unit 90 is attached to the upper end of the wireless unit 59 and rotates together with the upper portion of the wireless unit 59. The light projecting unit 10 and the light receiving unit 6 are fixed to the detection control unit 90 and rotate together with the detection control unit 90.

The first light projecting unit 11 and the second light projecting unit 12 constituting the light projecting unit 10 are arranged in parallel in the circumferential direction (horizontal direction). The first light projecting unit 11 includes a first light projecting element 11L corresponding to the first light source 11L described above, and a first light projecting lens 111 that condenses the first detection light 21. The second light projecting unit 12 includes a second light projecting element 12L corresponding to the above-described second light source 12L, and a second light projecting lens 112 that condenses the second detection light 22. The first light projecting lens 111 and the second light projecting lens 112 are arranged between the first light projecting element 11L and the second light projecting element 12L and the transmission window 41, respectively.

The light receiving unit 6 includes a light receiving lens 61 that collects the reflected light 30 and a light receiving element 63 that receives the reflected light 30 collected by the light receiving lens 61. The light receiving lens 61 is disposed between the light receiving element 63 and the transmission window 41. The light receiving element 63 generates a light receiving signal by receiving the reflected light 30.

The distance calculation unit 7, which is an example of the calculation unit 7 described above, is electrically connected to the light receiving element 63. The distance calculation unit 7 calculates the distance to the object S or the minute object m based on the light receiving signal from the light receiving element 63.

In the scanner 1 according to the second embodiment, the above-described detection control unit 90 corresponds to a rotating member that rotates about the rotation axis 50. Therefore, in the scanner 1 according to the second embodiment, the scanning unit 5 includes a rotating member (detection control unit 90) that rotates about the rotation axis 50, and the light projecting unit 10 and the light receiving unit 6 are fixed to the rotating member (detection control unit 90).

As illustrated in FIG. 33, the input/output control unit 99 receives an input signal from the outside and outputs a control signal to the outside. The input/output control unit 99 transmits a signal for rotating the rotating portion to the scanning unit 5. The setting storage unit 8 (an example of the storage unit 8 described above) stores information set by the user. The setting storage unit 8 is electrically connected to the input/output control unit 99. Although not illustrated, the setting storage unit 8 may be electrically connected to the detection control unit 90.

The detection control unit 90 transmits a signal for projecting the first detection light 21 and the second detection light 22 to the first light projecting unit 11 and the second light projecting unit 12. The detection control unit 90 receives a signal including information of a scanning angle from the rotation detection unit 54. The detection control unit 90 receives a signal including information on the first distance measurement value and the second distance measurement value from the distance calculation unit 7. The detection control unit 90 transmits a signal to the window dirt detection unit 76 to operate the window dirt detection unit 76, and receives a signal including information that the transmission window 41 is dirty from the window dirt detection unit 76. The detection control unit 90 determines the entry of the object S into the monitoring area 4 while identifying the object S and the minute object m from the received signal group.

As described above, according to the scanner 1 of the second embodiment, since the detection light 20 and the reflected light 30 are not reflected by the mirror 58, the spatially separating direction of the first detection light 21 and the second detection light 22 does not change due to the rotation of the rotating portion. Therefore, according to the scanner 1 according to the second embodiment, it is possible to reduce the possibility of erroneously determining the minute object m that is not the object to be detected while appropriately determining the object S that is the object to be detected without changing the spatially separating direction of the first detection light 21 and the second detection light 22.

Incidentally, the scanner 1 according to the present invention may have a configuration in which the light receiving unit 6 is fixed as in the first embodiment and the light projecting unit 10 rotates as in the second embodiment in addition to the scanners 1 according to the first and second embodiments. That is, in the scanner 1 having this configuration, the scanning unit 5 includes a rotating member (rotating body 57) that rotates about the rotation axis 50. The first light projecting unit 11, the second light projecting unit 12, and the mirror 58 for guiding the reflected light 30 to the light receiving unit 6 are fixed to the rotating member (rotating body 57).

Hereinafter, the operation of the scanner 1 according to the present invention will be described with reference to FIG. 34. FIG. 34 is a flowchart illustrating an operation of the scanner 1 according to the present invention.

In FIG. 34, N, Nd, M, and Md are used as variables. N is the number of the current optical axis. That is, N is a number indicating the number of the optical axis of the detection light 20 projected in the specific scan. For example, in a specific scan, N of the detection light 20 projected seventh (the first detection light 21 and the second detection light 22) is 7.

Nd is the number of continuous optical axes of the detection light 20 that detect something currently. That is, Nd is the number of continuous optical axes when the detection light 20 on the current optical axis continuously detects something from the detection light 20 on the past optical axis in a specific scan. For example, in a specific scan, when the detection light 20 projected seventh currently detects something and the detection lights 20 previously projected sixth and fifth similarly detect something, it means that something has been continuously detected three times from fifth to seventh, and thus Nd is 3.

M is the number of current scans. For example, if scanning is started and the current scanning of the detection light 20 is the ninth cycle, that is, the ninth scan, M is 9.

Md is the number of consecutive scans in which the object S is detected. For example, in a case where the object S is currently detected in the ninth scan and the object S is similarly detected in the preceding eighth scan, Md is 2 since two scans of the eighth and ninth scans continuously detect the object S.

As illustrated in FIG. 34, in step S1, the scanner 1 starts monitoring the monitoring area 4 and sets variables N, Nd, M, and Md to 0.

In step S2, the scanner 1 acquires the first distance measurement value of the N optical axis calculated by the calculation unit 7. In step S3, the scanner 1 acquires the second distance measurement value of the N optical axis calculated by the calculation unit 7. Note that N immediately after monitoring is started is 0.

In step S4, the scanner 1 determines whether both the first distance measurement value and the second distance measurement value are within the monitoring area 4 of the N optical axis. When both the first distance measurement value and the second distance measurement value are within the monitoring area 4 of the N optical axis (YES in step S4), the processing proceeds to step S5. If at least one of the first distance measurement value and the second distance measurement value is not within the monitoring area 4 on the N optical axis (NO in step S4), Nd is reset to 0 in step S10, and then the processing proceeds to step S11.

In step S5, 1 is added to Nd. In step S6, it is determined for the first time in this scan whether Nd exceeds the number of optical axes corresponding to the size of the minimum detection object. If Nd exceeds the number of optical axes corresponding to the size of the minimum detection object for the first time in this scan (YES in step S6), the processing proceeds to step S7. If Nd does not exceed the number of optical axes corresponding to the size of the minimum detection object for the first time in this scan (NO in step S6), the processing proceeds to step S11.

In step S7, 1 is added to Md. In step S8, it is determined whether Md is equal to or greater than a specified value of the number of consecutive scans calculated from a response time set in advance. When Md is equal to or greater than the specified value of the number of consecutive scans (YES in step S8), the processing proceeds to step S9. If Md has not exceeded the specified value of the number of consecutive scans (NO in step S8), the processing proceeds to step S11.

In step S9, the determination output unit 9 switches the OSSD, which is an example of the safety control signal, from on to off, and then proceeds to step S11.

In step S11, it is determined that the current optical axis has reached the last optical axis in the current scan. That is, it is determined whether N is the last optical axis. If N is the last optical axis (YES in step S11), the processing proceeds to step S12. If N is not the last optical axis (NO in step S11), 1 is added to N in step S13, and the processing returns to step S2.

In step S12, it is determined whether Nd has never exceeded the number of optical axes corresponding to the size of the minimum detection object in this scan. If Nd has never exceeded the number of optical axes corresponding to the size of the minimum detection object in this scan (YES in step S12), the processing proceeds to step S14. If Nd exceeds the number of optical axes corresponding to the size of the minimum detection object even once in this scan (NO in step S12), the processing proceeds to step S15.

In step S14, after Md is reset to 0, the processing proceeds to step S15. After 1 is added to M and N and Nd are reset to 0 in step S15, the processing returns to step S2.

The contents described as the mode for carrying out the invention are illustrative in all respects and are not restrictive. The scope of the present invention is indicated not by the above description but by the claims, and it is intended that meanings equivalent to the claims and all modifications within the scope are included. Among the configurations described above, configurations other than the configuration described as one aspect of the present invention in "means for solving problems" are arbitrary configurations, and can be appropriately deleted and changed.

### <Third Embodiment>

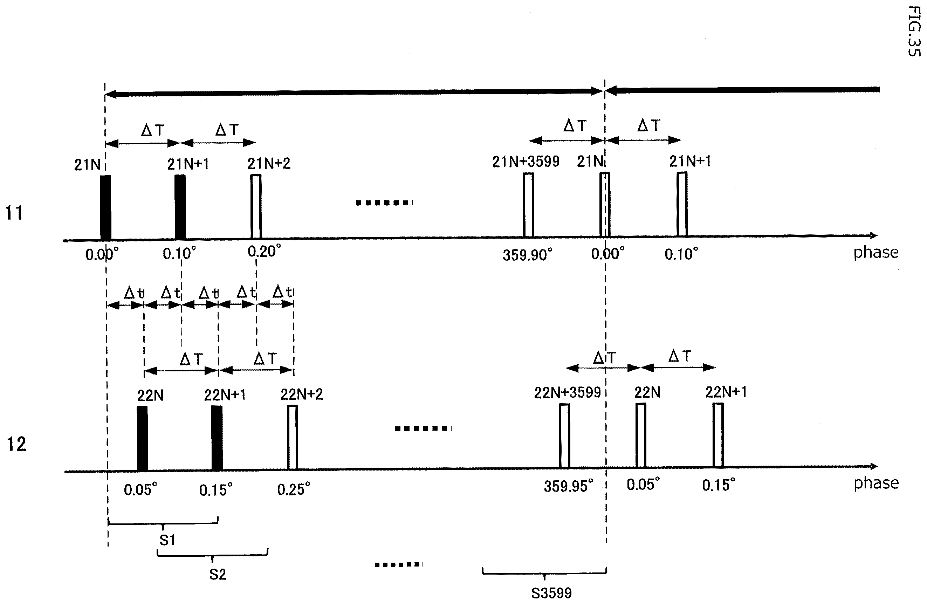

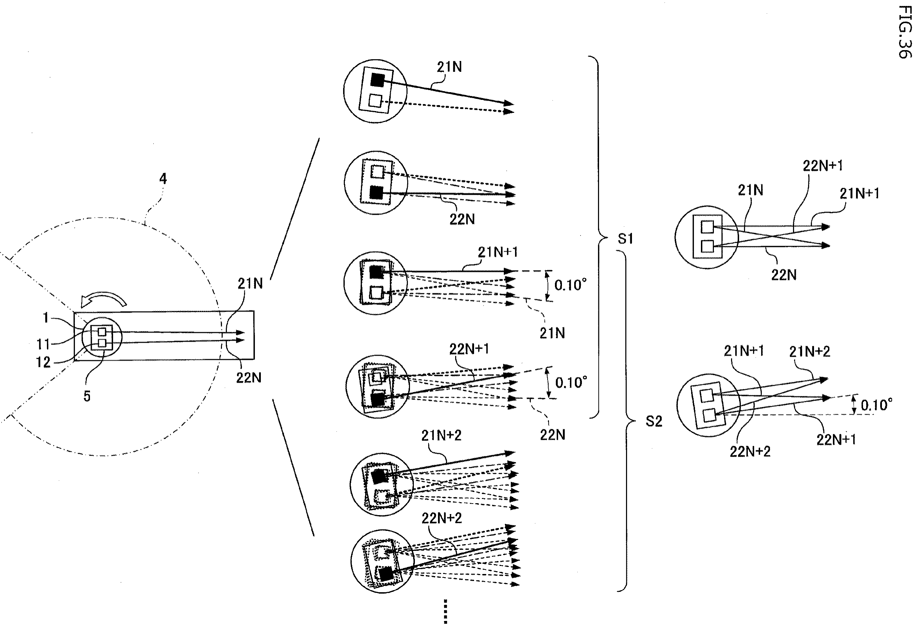

Next, a scanner 1 according to a third embodiment of the present invention will be described with reference to FIGS. 35 and 36. FIG. 35 is a graph illustrating a light projection timing of the scanner 1 according to the third embodiment. The upper graph 11 shows the light projection timing of the first detection light 21 from the first light projecting unit 11, and the lower graph 12 shows the light projection timing of the second detection light 22 from the second light projecting unit 12, with the phase (angle) as the horizontal axis. FIG. 36 is a schematic plan view illustrating how the scanning unit 5 of the scanner 1 according to the third embodiment scans the detection lights 21 and 22.

For example, a case is assumed where the scanning of the detection light 20 by the scanning unit 5 is performed in a scan cycle of one rotation (360°) in 36 msec. When the first light projecting unit 11 projects 3600 first detection lights 21 in one scan, the light projection time interval between adjacent first detection lights 21 is 10 µsec. In terms of the phase of one rotation of 360°, this corresponds to an interval of 0.10°, as shown in the upper part of FIG. 35. That is, the first detection light 21 is emitted every 0.10° while the scanning unit 5 is rotating.

In the present embodiment, as described with reference to FIG. 14, a time difference is provided between the light projection timing of the first detection light 21 and the light projection timing of the second detection light 22. Specifically, this time interval is set to 5 µsec, which is half of the above-described time interval of 10 µsec. Then, in terms of the phase of the scanning unit 5, the first detection light 21 and the second detection light 22 are alternately emitted every 0.05° (see FIG. 35). Then, when the first detection light 21 and the second detection light 22 are each emitted 3600 times, the scanning unit 5 makes one rotation.

The number of detection lights during one rotation is preferably 3600 or less for each of the first detection light 21 and the second detection light 22 from the viewpoint of downsizing the device. If the number of detection lights is larger than this, the amount of heat generated by the light projecting unit 10 increases, which may lead to an increase in the size of the scanner 1 due to countermeasures for heat dissipation. However, if it is acceptable to lower the output power of the first light projecting unit 11 and the second light projecting unit 12 and shorten the detection distance, a configuration in which more than 3600 detection lights are emitted may be adopted.

FIG. 36 schematically illustrates a state of scanning of the detection light in the present embodiment. The left view of FIG. 36 shows a state in which the first detection light 21N and the second detection light 22N are emitted from the rotating scanning unit 5 in substantially the same direction. More specifically, the first detection light 21N and the second detection light 22N are slightly inclined inward so as to approach each other as the distance from the scanner 1 increases. This makes it easier to fit both light spots of the first detection light 21N and the second detection light 22N within the range of the minimum detection object located at a position far from the scanner 1 (as described with reference to FIG. 21 and the like, the diameter of the light spot tends to spread along the long axis as the distance from the scanner 1 increases). As a result, the detection distance can be set longer, and in turn, a "protection area" and a "warning area" described later can be expanded. Regarding the six detection lights emitted from the scanner 1 arranged in the center of FIG. 36, a solid line indicates a detection light emitted at a certain scanning angle, a dotted line indicates a detection light not emitted at the certain scanning angle, a one-dot chain line indicates a virtual line of a detection light at a previous scanning angle, and a broken line indicates a virtual line of a detection light at two or more previous scanning angles. While the scanning unit 5 rotates, the detection light is emitted in the order of the first detection light 21N, the second detection light 22N, the first detection light 21N+1, and the second detection light 22N+1 at the timing of FIG. 35. In the present embodiment, these four consecutive detection lights are treated as one set to determine the object S. In FIG. 35, as an example, a set of the first detection light 21N, the second detection light 22N, the first detection light 21N+1, and the second detection light 22N+1 is indicated by reference sign S1. As a next set to the set of reference sign S1, a set of the first detection light 21N+1, the second detection light 22N+1, the first detection light 21N+2, and the second detection light 22N+2 is indicated by reference sign S2. In the consecutive sets S1 and S2, the first detection light 21N+1 and the second detection light 22N+1 are overlapped, and other consecutive sets are also partially overlapped (the latter half of the previous set and the first half of the next set). Such a set is also referred to as a detection light set or a detection light group. The detection light set or the detection light group here is composed of a plurality of individual detection lights emitted at physically different timings and different rotation angles, but is treated as a single logical unit in the determination processing by the determination output unit 9. In other words, the determination output unit 9 extracts a set of distance measurement values corresponding to a predetermined combination (detection light group) from a plurality of distance measurement values obtained in time series during the rotation of the scanning unit 5, and evaluates the entire set as a single detection event. In short, the determination output unit 9 logically groups a plurality of first detection lights (detection lights 21N, 21N+1 shown in FIG. 36) and second detection lights (detection lights 22N, 22N+1 shown in FIG. 35) emitted at different timings and different scanning angles accompanying the rotation of the scanning unit 5 as one detection light group corresponding to a predetermined single direction, and determines the entry of the object into the monitoring area based on a plurality of distances calculated by the calculation unit 7 according to each detection light constituting the detection light group.

By treating these four detection lights as one set, they are regarded as detection in one direction. As shown enlarged from the center to the right of FIG. 36, the two detection lights located on the outermost side in this set of four detection lights, that is, the second detection light 22N and the first detection light 21N+1 in the case of the set S1, and the second detection light 22N+1 and the first detection light 21N+2 in the case of the set S2, are configured to be substantially parallel (note that in the right view of FIG. 36, the overlap of the scanning unit 5 in a plurality of rotational postures is omitted to improve visibility). As described above, the first detection light 21 emitted from the first light projecting unit 11 and the second detection light 22 emitted from the second light projecting unit 12 do not necessarily have to be parallel, and a plurality of detection lights may be configured as one set, and the two outermost lights in the set may be configured to be substantially parallel. According to such a configuration, by treating a plurality of detection lights as a set and regarding them as detection lights in the same direction, it is possible to appropriately determine the minimum detection object, and at the same time, to widen the substantial distance between the two outermost substantially parallel detection lights, thereby more effectively suppressing erroneous detection of the minute object m.

In the conventional technology in which a single detection light is scanned by rotating a mirror, each instantaneous detection light carries information of an independent direction. In contrast, in the present invention, a series of detection light pulses emitted in proximity in time and space during the continuous rotation of the scanning unit 5 are processed as one virtual detection beam. This makes it possible to dramatically improve the ability to distinguish between point-like noise (minute objects) and objects with a planar spread, which was difficult to evaluate with a single thin beam. In other words, the present invention not only physically generates a plurality of beams, but also dynamically groups these beams by software processing to generate higher-order detection information. This dynamic grouping is essentially different from, for example, an LED array method in which a combination of detection lights is fixed by a physical arrangement of hardware. In the LED array method, the combination of detection lights tends to be fixed by the physical arrangement of the hardware, but in the present invention, the configuration of the detection light group and the degree of overlap with the adjacent detection light group (for example, the relationship between the sets S1 and S2 in FIG. 35) can be flexibly set by software according to the application and the detection target, and can be changed and optimized. Further, in the case where the first detection light 21 and the second detection light 22 are projected with a time difference as in the present embodiment, as described above, even with the light receiving unit 6 having a single light receiving element 63, it is possible to temporally distinguish whether the reflected light is derived from the first detection light 21 or the second detection light 22 based on the difference in the timing at which the reflected light reaches the light receiving element 63.

### <Other Embodiment>

In the second embodiment described above (FIGS. 32 and 33), the light projecting unit 10 and the light receiving unit 6 are fixed to the rotating member (detection control unit 90) and rotated together with the rotating member. This configuration is advantageous in eliminating the angle dependency of the measurement accuracy as compared with the first embodiment (FIGS. 30 and 31) in which the light projecting unit 10 is provided in the fixed portion of the scanner 1. More specifically, when the light projecting unit 10 is provided in the fixed portion of the scanner 1 as in the first embodiment, the relative arrangement of the spots irradiated by the detection light on the object S outside the scanner 1 may change depending on the angle of the rotating mirror 58.

For example, when the first light projecting unit 11 and the second light projecting unit 12 are arranged side by side in the horizontal direction in the light projecting unit 10, the spots on the object S are also arranged side by side in the horizontal direction when the object S is in front of the scanner 1. However, when the mirror 58 rotates by 90° and the object S is on the side of the scanner 1, the spots on the object S are arranged side by side in the vertical direction, which may cause an angle dependency in the detection accuracy. On the other hand, according to the configuration in which the light projecting unit 10 itself is rotated as in the second embodiment, the relative positional relationship of the spots of the first detection light 21 and the second detection light 22 on the object S is always kept constant regardless of the relative angle of the object S with respect to the scanner 1. This makes it possible to achieve uniform and stable detection performance over the entire scanning range.

Further, the first light projecting unit 11 and the second light projecting unit 12 are not limited to a configuration in which each includes an individual light source (the first light projecting element 11L and the second light projecting element 12L). For example, a configuration may be adopted in which the first detection light 21 and the second detection light 22 are generated using a single light source and a light separating means such as a beam splitter or the above-described light refracting body for separating the light into two. This configuration can contribute to a reduction in the number of components, downsizing of the device, and cost reduction. Furthermore, an optical filter having different characteristics may be arranged in each of the optical paths separated by the light separating means. This makes it possible to individually adjust the wavelength (color) and spot diameter of the first detection light 21 and the second detection light 22. For example, by using lights of different wavelengths, the light receiving unit 6 can easily identify which detection light the received light is derived from by identifying the wavelength of the received light.

In the present invention, the first light projecting unit 11 and the second light projecting unit 12 may be configured such that the respective detection lights are regarded as detection lights emitted in the same direction from two positions spatially separated on a transmission window 41 provided on the casing of the scanner 1 and are emitted to the outside. In this case, it is preferable that the optical axes of the two detection lights (for example, the first detection light 21 and the second detection light 22 in FIG. 9, or the second detection light 22N and the first detection light 21N+1 which are the two outermost detection lights described in FIG. 36) are parallel at the time of emission from the transmission window 41.

Note that the transmission window 41 may be configured by a U-shaped light transmissive cover (so-called protective cover) that surrounds the front surface and both side surfaces of the lower part of the scanner 1, as shown in FIGS. 30 and 32, for example. This light transmissive cover can be formed of an elastically deformable synthetic resin material such as polycarbonate.

In the present specification, that the first light projecting unit 11 and the second light projecting unit 12 are "spatially separated" means that a distance (separation distance) between an optical axis of the first detection light 21 and an optical axis of the second detection light 22 is set within a predetermined range. Specifically, this separation distance is preferably set to be smaller than a typical dimension of a minimum object to be detected (for example, a human finger or a minimum detection object defined by a safety standard) and larger than a typical dimension of a minute object not to be detected (for example, an insect or relatively large dust floating in the air). For example, this separation distance can be set to 20 mm. Theoretically, it is possible to separate the first light projecting unit 11 and the second light projecting unit 12 by several centimeters if the size of the scanner 1 is allowed, but from the viewpoint of maintaining the compactness of the device, the separation distance is preferably about 20 mm.

Further, an operation mode may be provided to enable or disable a part of the determination logic shown in the flowchart of FIG. 34 according to the size of the object S to be detected. For example, when it is desired to stably detect an object that is smaller than the minimum detection object but larger than the minute object m, a "multi-sampling OFF mode" may be selectable. In this mode, the processing of steps S5 and S6 in the flowchart of FIG. 34, that is, the determination based on the number of consecutive detected optical axes Nd (the number of consecutive optical axes equal to or greater than a predetermined number) is omitted (bypassed). In this case, when the number of times the determination in step S4 is YES (that is, both two detection lights detect an object) reaches a specified number of scans corresponding to a preset response time (the specified value in step S8), the entry of the object S is determined, and the OSSD is switched to off.

Furthermore, a configuration may be adopted in which the monitoring area 4 shown in FIG. 15 is divided into a "protection area" closest to a danger source and a "warning area" located outside the protection area, and the determination logic and the operation mode (the multi-sampling OFF mode described above, etc.) are individually set for each area. For example, depending on the size of the minimum detection object selected by the user, it may be switched whether to perform determination using both the first detection light 21 and the second detection light 22, or to perform determination using only one of the first detection light 21 and the second detection light 22 as shown in FIG. 24 or 25. Further, in a case where a plurality of protection areas are set and the protection area to be used is switched by a bank switching function, the determination logic may be configured to be changed according to the switching.

Note that, as described above, the first light projecting unit 11 and the second light projecting unit 12 are not limited to a configuration in which each includes an individual light source. In short, the light projecting unit 10 may be configured to project the first detection light and the second detection light, which constitute a detection light group regarded as being emitted in a predetermined single direction, from positions separated on the light transmissive cover at different timings and different scanning angles accompanying the rotation of the scanning unit 5. Further, the determination output unit 9 may determine the entry of the object into the monitoring area for the predetermined single direction based on a plurality of distances calculated by the calculation unit 7 according to the first detection light 11 and the second detection light 12 constituting the above-described detection light group.

As described above, the "detection light group emitted in a predetermined single direction" in the present specification does not mean a group of detection lights physically pointing in the same direction, but rather a set of a plurality of detection lights predefined to be treated as a single unit (group) logically when the determination output unit 9 performs entry determination of an object. Such a set is typically composed of a plurality of detection lights that are emitted in proximity in time and space while the scanning unit 5 rotates over a predetermined small angle range (for example, a plurality of detection lights emitted at different timings from different first and second light projecting units 11 and 12).

The concept of the "detection light group" described above may be rephrased as, for example, a "virtual detection spot". That is, instead of a small spot formed by an individual detection light, an area covered by the entire detection light group on the object is regarded as one virtual detection spot, and determination is performed based on the presence/absence or pattern of reflected light within this virtual detection spot. This makes it possible to effectively suppress erroneous detection by determining that no object is present as a whole virtual detection spot even if a minute object such as dust or an insect blocks some of the detection lights. Such processing may be regarded as a kind of "spatio-temporal filtering". That is, it may be regarded as a process of extracting only a signal having temporal and spatial persistence and continuity (detection by an object) by integrating a plurality of detection results adjacent on a time axis (light projection timing) and a spatial axis (light projection position, scanning angle), and removing a point-like noise (detection by a minute object).

Further, the storage unit 8 may store information on how to configure this detection light group, that is, so-called "detection light group configuration information" that defines which first detection light 21 and second detection light 22 emitted at which timing are to be treated as one group. The determination output unit 9 refers to this detection light group configuration information, cuts out data from a distance measurement data stream sequentially obtained from the calculation unit 7 according to the detection light group configuration information, and performs grouping and determination processing. According to such a configuration, the configuration of the detection light group (for example, the number of detection lights constituting the group and the number of overlapping lights) can be changed or updated by a software update after shipment, which can improve the expandability and flexibility of the scanner 1.

The present invention provides a scanner and has industrial applicability.

## Claims

1. A scanner comprising:
a light projecting unit that projects detection light;
a scanning unit that scans the detection light projected from the light projecting unit in a circumferential direction around a rotation axis;
a light receiving unit that receives reflected light obtained by the detection light scanned by the scanning unit and reflected by an object in a detection area, and generates a light receiving signal;
a calculation unit that calculates a distance to the object based on the light receiving signal generated by the light receiving unit;
a storage unit that stores information of a monitoring area set in advance in the detection area; and
a determination output unit that determines entry of the object into the monitoring area based on the distance calculated by the calculation unit and a scanning angle of the detection light scanned by the scanning unit, and outputs a control signal,
wherein
a scanner includes:
a first light projecting unit that projects first detection light; and
a second light projecting unit arranged at a position spatially separated from the first light projecting unit and projects second detection light from a position spatially separated from the first detection light.

2. The scanner according to claim 1, wherein
the scanning unit scans the first detection light projected by the first light projecting unit and the second detection light projected by the second light projecting unit in the circumferential direction.

3. The scanner according to claim 1, wherein
the determination output unit determines the entry of the object into the monitoring area based on a plurality of the distances calculated by the calculation unit according to each of the first detection light and the second detection light.

4. The scanner according to claim 3, wherein
the determination output unit determines that the object has entered the monitoring area when at least two of the plurality of distances indicate the entry of the object into the monitoring area.

5. The scanner according to claim 1, wherein
the light projecting unit makes a light projection timing of the first detection light by the first light projecting unit different from a light projection timing of the second detection light by the second light projecting unit.

6. The scanner according to claim 1, wherein
the first light projecting unit projects the first detection light in the same direction a plurality of times, and the second light projecting unit projects the second detection light in the same direction a plurality of times.

7. The scanner according to claim 1, wherein
the detection light at both ends in the circumferential direction among the first detection light and the second detection light at an arbitrary light projection timing and a next light projection timing is spatially separated in the monitoring area.

8. The scanner according to claim 7, wherein
the light projecting unit sets a light projection timing at which the detection light is projected, and
the light projection timing set by the light projecting unit sets an interval at which the detection light at both ends in the circumferential direction is spatially separated to be equal to or less than a minimum detection object that is the smallest object among the objects determined to enter by the determination output unit in the monitoring area.

9. The scanner according to claim 1, wherein the light projecting unit further includes:
a first light source that generates the first detection light; and
a second light source that generates the second detection light and is different from the first light source.

10. The scanner according to claim 1, wherein
the first detection light and the second detection light each have a long axis in a transverse shape, and
the long axis of the first detection light in the transverse shape and the long axis of the second detection light in the transverse shape are on different straight lines.

11. The scanner according to claim 1, wherein
the light projecting unit can stop projection of either the first detection light or the second detection light.

12. The scanner according to claim 1, wherein
the scanning unit includes a rotating member that rotates about the rotation axis, and
the first light projecting unit and the second light projecting unit, and a mirror for guiding the reflected light to the light receiving unit are fixed to the rotating member.

13. The scanner according to claim 1, wherein
the scanning unit includes a rotating member that rotates about the rotation axis, and
a mirror that guides the first detection light and the second detection light projected from each of the first light projecting unit and the second light projecting unit into the detection area and guides the reflected light reflected by the object in the detection area to the light receiving unit is fixed to the rotating member.

14. The scanner according to claim 1, wherein
the scanning unit includes a rotating member that rotates about the rotation axis, and
the light projecting unit and the light receiving unit are fixed to the rotating member.

15. The scanner according to claim 1, wherein
the first light projecting unit and the second light projecting unit are arranged at spatially separated positions such that the first detection light and the second detection light are separated from each other in the circumferential direction.

16. The scanner according to claim 1 or 2, further comprising:
a casing; and
a light transmissive cover provided on the casing and configured to transmit the first detection light and the second detection light, wherein
the first light projecting unit and the second light projecting unit are configured to emit the first detection light and the second detection light, respectively, to an outside from positions spatially separated on the light transmissive cover.

17. The scanner according to claim 16, wherein
the determination output unit logically groups a plurality of the first detection lights and the second detection lights emitted at different timings and different scanning angles accompanying rotation of the scanning unit as one detection light group corresponding to a predetermined single direction, and determines the entry of the object into the monitoring area based on a plurality of the distances calculated by the calculation unit according to each detection light constituting the detection light group.

18. The scanner according to claim 1 or 2, wherein
the determination output unit is configured to be switchable between a mode for determining the entry based on whether the object is detected in a predetermined number or more of consecutive optical axes, and a mode for determining the entry by omitting the determination in the consecutive optical axes.

19. A scanner comprising:
a light projecting unit that projects detection light;
a scanning unit that scans the detection light projected from the light projecting unit in a circumferential direction around a rotation axis;
a light receiving unit that receives reflected light obtained by the detection light scanned by the scanning unit and reflected by an object in a detection area, and generates a light receiving signal;
a calculation unit that calculates a distance to the object based on the light receiving signal generated by the light receiving unit;
a storage unit that stores information of a monitoring area set in advance in the detection area;
a determination output unit that determines entry of the object into the monitoring area based on the distance calculated by the calculation unit and a scanning angle of the detection light scanned by the scanning unit, and outputs a control signal;
a casing that houses the light projecting unit, the scanning unit, the light receiving unit, the calculation unit, the storage unit, and the determination output unit; and
a light transmissive cover provided on the casing and configured to transmit the detection light projected from the light projecting unit, wherein
the light projecting unit projects a first detection light and a second detection light that constitute a detection light group regarded as being emitted in a predetermined single direction, the first and second detection lights being emitted at different timings and different scanning angles accompanying rotation of the scanning unit from positions spatially separated on the light transmissive cover.

20. The scanner according to claim 19, wherein
the determination output unit determines the entry of the object into the monitoring area for the predetermined single direction based on a plurality of the distances calculated by the calculation unit according to the first detection light and the second detection light constituting the detection light group.
